(19) Europäisches Patentamt / European Patent Office / Office européen des brevets

(11) **EP 3 530 429 B1**

(12) **EUROPEAN PATENT SPECIFICATION**

(45) Date of publication and mention of the grant of the patent:
**26.04.2023 Bulletin 2023/17**

(21) Application number: **17861841.9**

(22) Date of filing: **10.10.2017**

(51) International Patent Classification (IPC):
**B29C 44/44** *(2006.01)*       **B29C 44/34** *(2006.01)*
**C08J 9/232** *(2006.01)*       **C08J 9/12** *(2006.01)*
**C08J 9/18** *(2006.01)*

(52) Cooperative Patent Classification (CPC):
**B29C 44/445; B29C 44/00; B29C 44/44;**
**B29C 44/60; B29C 67/20; C08J 9/232;**
B29C 44/3426; B29C 67/205; B29K 2021/003;
B29K 2023/06; B29K 2023/10; B29K 2023/38;
B29K 2075/02; C08J 9/122; C08J 9/18;       (Cont.)

(86) International application number:
**PCT/JP2017/036691**

(87) International publication number:
**WO 2018/074286 (26.04.2018 Gazette 2018/17)**

(54) **METHOD FOR MANUFACTURING THERMOPLASTIC ELASTOMER FOAMING PARTICLE MOLDED BODY**

VERFAHREN ZUR HERSTELLUNG EINES FORMKÖRPERS AUS THERMOPLASTISCHEN ELASTOMERSCHAUMPARTIKELN

PROCÉDÉ DE FABRICATION D'UN CORPS MOULÉ DE PARTICULES MOUSSANTES D'ÉLASTOMÈRE THERMOPLASTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.10.2016 JP 2016206361**

(43) Date of publication of application:
**28.08.2019 Bulletin 2019/35**

(73) Proprietor: **JSP Corporation**
**Chiyoda-ku, Tokyo 100-0005 (JP)**

(72) Inventor: **OGAKI, Yoshihisa**
**Kanuma-shi**
**Tochigi 322-0014 (JP)**

(74) Representative: **Gille Hrabal**
**Partnerschaftsgesellschaft mbB**
**Patentanwälte**
**Brucknerstraße 20**
**40593 Düsseldorf (DE)**

(56) References cited:
| | |
|---|---|
| JP-A- S 634 940 | JP-A- S62 198 444 |
| JP-A- S63 178 029 | JP-A- 2002 248 645 |
| JP-A- 2003 266 468 | JP-A- 2003 266 468 |
| JP-B1- 6 227 202 | US-A- 4 698 191 |

EP 3 530 429 B1

(52) Cooperative Patent Classification (CPC): (Cont.)
C08J 2201/026; C08J 2300/22; C08J 2300/26;
C08J 2353/00; C08J 2375/04

(52) Cooperative Patent Classification (CPC): (Cont.)
C08J 2201/026; C08J 2300/22; C08J 2300/26;
C08J 2353/00; C08J 2375/04

**Description**

Technical Field

The present invention relates to a method for producing an expanded thermoplastic elastomer beads molded article.

Background Art

In general, a thermoplastic elastomer is excellent in wear resistance, cold resistance, and rebound resilience. Due to the high mechanical strength thereof, a thermoplastic elastomer is categorized an engineering elastomer, and is being applied to various fields, such as housewares, electric appliance components, sporting goods, automobile components, and building and civil engineering materials.

An expanded molded article of the thermoplastic elastomer can be reduced in weight and can be more flexible while retaining the excellent basic characteristics of the elastomer, such as the wear resistance and the rebound resilience, and therefore is expected to be spread out over applications, such as sporting goods and automobile components. In recent years, in the thermoplastic elastomer expanded articles, an in-mold molded article of expanded thermoplastic elastomer beads is being demanded since expanded molded articles having various shapes corresponding to the metal mold shapes can be obtained.

The techniques for producing the expanded thermoplastic elastomer beads molded article includes the technique relating to an expanded urethane thermoplastic elastomer beads molded article described in PTL 1, and the technique relating to an expanded olefin thermoplastic elastomer beads molded article described in PTL 2.

Citation List

Patent Literatures

PTL 1: US 2012/0329892 A
PTL 2: JP 2003-147116 A

PTL 2 discloses a method according to the preamble of claim 1.

Summary of Invention

Technical Problem

The expanded thermoplastic elastomer beads have a strong repulsive force of the expanded beads but are difficult in controlling the secondary expansion property in the in-mold molding, which may cause deterioration in properties under heating, and derived from the deterioration, the in-mold molding of the expanded thermoplastic elastomer beads is difficult as compared to the in-mold molding of expanded general purpose resin beads. PTL 2 describes that for providing an expanded beads molded article through in-mold molding of expanded olefin thermoplastic elastomer beads, the same in-mold molding method as the in-mold molding method for expanded general purpose resin beads, such as expanded polyolefin resin beads, described in JP S58-171924 A can be employed, but it is difficult to mold the expanded thermoplastic elastomer beads through in-mold molding as described above, and therefore it has been difficult to provide a commercially demanded favorable expanded thermoplastic elastomer beads molded article by the aforementioned method, from the standpoint of the appearance, the dimensional stability, and the fusion bondability of the expanded beads.

The present invention has been made for solving the problem, and an object thereof is to provide a method for producing an expanded beads molded article, capable of providing an expanded thermoplastic elastomer beads molded article that is excellent in appearance, excellent in dimensional stability, and excellent in fusion bondability of the expanded beads, compression characteristics, and rebound resilience.

Solution to Problem

Accordingly, the present invention provides the following items [1] to [9].

[1] A method for producing an expanded thermoplastic elastomer beads molded article, including: filling expanded thermoplastic elastomer beads in a mold so as to be compressed state; and then supplying a heating medium into the mold to heat the expanded beads, so as to fusion bond the expanded beads to each other, the expanded beads having a closed cell ratio of 70% or more and a bulk density (Bd) after conditioning at 23°C and a relative humidity of 50% under ordinary pressure for 48 hours of 200 g/L or less, a filled amount (M) [g] of the expanded beads in the mold having an inner capacity (V) [L] and an internal pressure (IP) [$10^{-1}$ MPa] of the expanded beads satisfying the following expressions (1) and (2):

$$0.9 \cdot V \cdot Bd \leq M \qquad\qquad (1)$$

$$4.2 \cdot Bd^{-0.23} \leq IP + M/(V \cdot Bd) \leq 8.0 \cdot Bd^{-0.23} \qquad\qquad (2).$$

[2] The method for producing an expanded thermoplastic elastomer beads molded article according to the item [1], wherein the expanded thermoplastic elastomer beads are compressively filled in the mold with a pressurizing gas.

[3] The method for producing an expanded thermoplastic elastomer beads molded article according to the item [2], wherein a pressure in the mold in compressively filling the expanded beads is from 0.08 to 1.0 [MPa(G)].

[4] The method for producing an expanded thermoplastic elastomer beads molded article according to any one of the items [1] to [3], wherein the internal pressure (IP) of the expanded beads is from 0 to 2.0 [$10^{-1}$ MPa] (including 0).

[5] The method for producing an expanded thermoplastic elastomer beads molded article according to any one of the items [1] to [3], wherein the internal pressure (IP) of the expanded beads is from 0 to 0.2 [$10^{-1}$ MPa] (including 0).

[6] The method for producing an expanded thermoplastic elastomer beads molded article according to any one of the items [1] to [5], including, preceding the step of supplying a heating medium into the mold to heat the expanded beads, displacing a gas existing in gaps among the expanded beads filled in the mold by steam.

[7] The method for producing an expanded thermoplastic elastomer beads molded article according to any one of the items [1] to [6], wherein

the mold includes one pair of molds of a positive mold and a negative mold each having a steam chamber, and the step of supplying a heating medium into the mold to heat the expanded beads, includes, performed in this order:

a unidirectional heating step of supplying steam to the steam chamber of any one of the positive mold and the negative mold, making the steam to pass through a molding cavity formed by combining the positive mold and the negative mold, in which the expanded beads are filled, and flowing the steam into the steam chamber of the other one of the molds;

a reverse unidirectional heating step of supplying steam to the steam chamber of the other one of the molds, making the steam to pass through the molding cavity, and flowing the steam into the steam chamber of the mold, to which the steam has been supplied in the unidirectional heating step; and

a main heating step of supplying steam simultaneously to the steam chambers of the positive mold and the negative mold, so as to fusion bond the expanded beads to each other.

[8] The method for producing an expanded thermoplastic elastomer beads molded article according to any one of the items [1] to [7], wherein the expanded thermoplastic elastomer beads have a boiling xylene insoluble content of 60% by weight or less (including 0), and are expanded olefin thermoplastic elastomer beads containing, as a base material, a multi-block copolymer containing a polyethylene block and an ethylene-$\alpha$-olefin copolymer block wherein the multi-block copolymer has a Shore A hardness of from 65 to 95.

[9] The method for producing an expanded thermoplastic elastomer beads molded article according to any one of the items [1] to [7], wherein the expanded thermoplastic elastomer beads are expanded urethane thermoplastic elastomer beads containing, as a base material, a urethane thermoplastic elastomer, having a Shore A hardness of from 80 to 95.

Advantageous Effects of Invention

According to the present invention, a method for producing an expanded beads molded article, capable of providing an expanded thermoplastic elastomer beads molded article that is excellent in appearance, excellent in dimensional stability, and excellent in fusion bondability of the expanded beads, compression characteristics, and rebound resilience can be provided. Furthermore, by employing an in-mold molding method of filling the expanded beads in the mold with a pressurizing gas, a method for producing an expanded beads molded article, capable of providing an expanded beads molded article that has a particularly small variation in density among each part of the expanded beads molded article can be provided.

Brief Description of Drawings

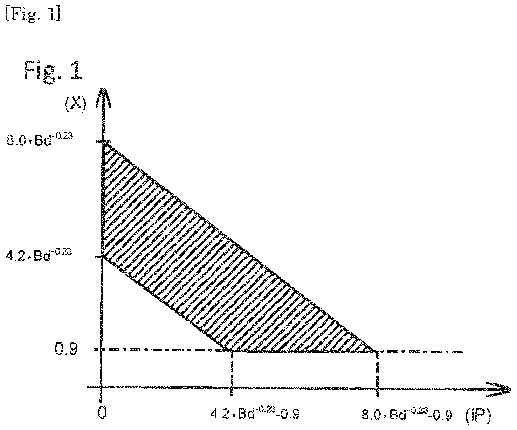

Fig. 1 is a diagram showing a graph with the compression filling ratio (X (= M/(V·Bd)) [-] of the expanded thermoplastic elastomer beads as the ordinate and the internal pressure (IP) [$10^{-1}$ MPa] of the expanded thermoplastic elastomer beads as the abscissa, in which the range (hatched area) that satisfies the expressions (1) and (2) of the present invention in the case where the bulk density of the expanded beads is shown by Bd [g/L].

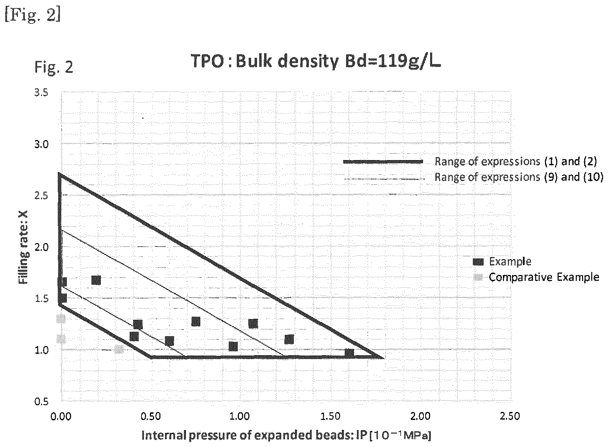

Fig. 2 is an explanatory illustration of the expressions (1) and (2) or (9) and (10) of the present invention, with the compression filling ratio (X (= M/(V·Bd)) [-] of the expanded thermoplastic elastomer beads as the ordinate and the internal pressure (IP) [$10^{-1}$ MPa] of the expanded thermoplastic elastomer beads as the abscissa (in the case where the bulk density of the expanded beads is 119 g/L (Table 1)).

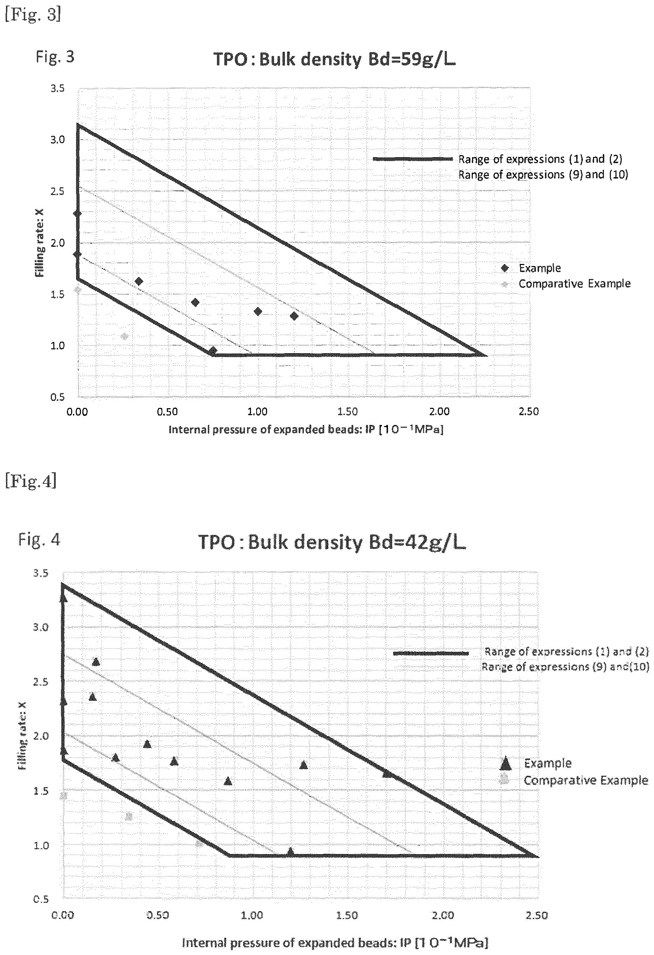

Fig. 3 is an explanatory illustration of the expressions (1) and (2) or (9) and (10) of the present invention, with the compression filling ratio (X (= M/(V·Bd)) [-] of the expanded thermoplastic elastomer beads as the ordinate and the internal pressure (IP) [$10^{-1}$ MPa] of the expanded thermoplastic elastomer beads as the abscissa (in the case where the bulk density of the expanded beads is 59 g/L (Table 2)).
Fig. 4 is an explanatory illustration of the expressions (1) and (2) or (9) and (10) of the present invention, with the compression filling ratio (X (= M/(V·Bd)) [-] of the expanded thermoplastic elastomer beads as the ordinate and the internal pressure (IP) [$10^{-1}$ MPa] of the expanded thermoplastic elastomer beads as the abscissa (in the case where the bulk density of the expanded beads is 42 g/L (Table 3)).

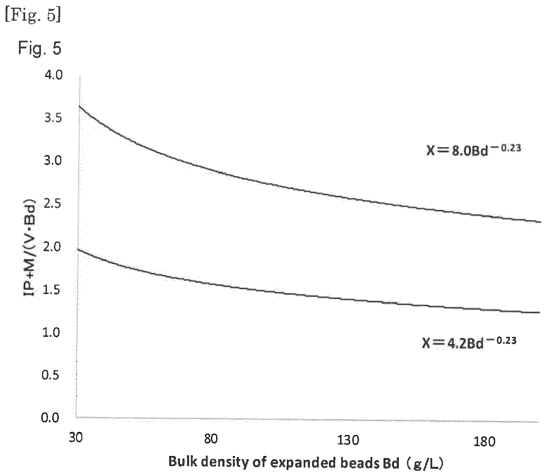

Fig. 5 is a diagram showing the lower limit and the upper limit of the resultant force (IP + M/(V·Bd)) of the expansion force by the increase of the internal pressure of the expanded beads and the restoring force by the compressed state of the expanded beads in the mold with respect to the bulk density (Bd) [g/L] of the expanded beads capable of providing a favorable expanded beads molded article, with (IP + M/(V·Bd)) as the ordinate and Bd as the abscissa.

Description of Embodiments

<Method for producing Expanded Thermoplastic Elastomer Beads Molded Article>

The method for producing an expanded thermoplastic elastomer beads molded article of the present invention relates to in-mold molding by a method of filling expanded thermoplastic elastomer beads in a mold in a compressed state, as shown in a representative example shown below.
The representative example includes, in this order:

a filling step of, while compressing prescribed expanded thermoplastic elastomer beads with a pressurizing gas, transferring the expanded thermoplastic elastomer beads to a molding cavity in a pressurized state formed in an interior of a mold, represented by a metal mold, so as to fill a particular amount of the expanded thermoplastic elastomer beads in the molding cavity (which may be hereinafter referred to as a "cavity");
a liberating step of releasing pressure in the cavity to liberate the expanded thermoplastic elastomer beads in a mold; and
a heating step of supplying a heating medium into the mold to heat the expanded thermoplastic elastomer beads, so as to fusion bond the expanded thermoplastic elastomer beads to each other.

The prescribed expanded thermoplastic elastomer beads referred herein mean such expanded beads that the bulk density (Bd) after allowing to stand the expanded thermoplastic elastomer beads under condition at 23°C and a relative humidity of 50% under ordinary pressure for 48 hours is 200 g/L or less, the closed cell ratio thereof is 70% or more, and the internal pressure (IP) of the expanded beads filled in the cavity is preferably from 0 to 2.0 [$10^{-1}$ MPa]. In the following description, the expanded thermoplastic elastomer beads may be referred simply to as "expanded beads".
In the present invention, the "ordinary pressure" has the same meaning as 0 [MPa(G)] in terms of gauge pressure, and means approximately 1 atm in terms of absolute pressure.
The filling the particular amount of the expanded thermoplastic elastomer beads means that the expanded beads are filled in an amount M [g] that satisfies the following expressions (1) and (2).

$$0.9 \cdot V \cdot Bd \leq M \qquad (1)$$

$$4.2 \cdot Bd^{-0.23} \leq IP + M/(V \cdot Bd) \leq 8.0 \cdot Bd^{-0.23} \qquad (2)$$

In the expressions, the details of V, Bd, M, and IP are as follows:

V: the capacity [L] of the cavity of the metal mold,
Bd: the bulk density [g/L] of the expanded thermoplastic elastomer beads after allowing to stand the expanded beads under condition at 23°C and a relative humidity of 50% under ordinary pressure for 48 hours,
M: the filled amount [g] of the expanded thermoplastic elastomer beads in the cavity in the filling step, and
IP: the internal pressure [$10^{-1}$ MPa] of the expanded thermoplastic elastomer beads.

The value of "M/(V·Bd)" may be referred to as a "compression filling ratio (X)" or simply to as a "filling ratio (X)". The filling ratio (X) is in terms of mass ratio [·].

According to the in-mold molding method of compressing and filling the expanded beads in the metal mold by the aforementioned constitution, the expanded thermoplastic elastomer beads having the particular bulk density and the particular closed cell ratio are used, and the expanded beads are molded under condition satisfying the particular conditions for the internal pressure of the expanded beads and the filled amount of the expanded beads in the mold, whereby the problem of the difficulty in in-mold molding of expanded thermoplastic elastomer beads can be solved. Specifically, an expanded thermoplastic elastomer beads molded article that shows excellent properties, such as the appearance, the dimensional stability, the fusion bondability of the expanded beads, and the rebound resilience can be obtained with good yield. According to the present invention, furthermore, the in-mold molding can be performed without particular increase of the internal pressure of the expanded beads, and thereby the molding cycle in the in-mold molding can be shortened.

The method for producing an expanded thermoplastic elastomer beads molded article of the present invention will be described in detail below.

[Expanded Thermoplastic Elastomer Beads]

The method for producing the expanded thermoplastic elastomer beads used in the present invention is not particularly limited, and the expanded beads can be obtained by a method, in which a thermoplastic elastomer is supplied to an extruder and kneaded with a blowing agent and a cell nucleating agent in the extruder to provide an expandable molten product, and the molten product is extruded from a strand die to provide an expanded strand, which is then cut to provide expanded beads; a method, in which a thermoplastic elastomer is supplied to an extruder and kneaded with a cell nucleating agent in the extruder to provide a molten product, the molten product is extruded from the strand die, thermoplastic elastomer beads are produced therefrom by a strand cutting method or an underwater cutting method, the elastomer beads are impregnated with a blowing agent by using a pressure tight vessel, and the resulting expandable thermoplastic elastomer beads are expanded; and the like.

The thermoplastic elastomer used as the base material of the expanded beads in the present invention may be appropriately selected depending on the characteristics demanded for the expanded thermoplastic elastomer beads molded article. In the thermoplastic elastomers, an olefin thermoplastic elastomer is preferred from the standpoint of the general versatility, the chemical resistance, the further enhancement of the heat resistance through introduction of a crosslinked structure, and the like, and a urethane thermoplastic elastomer is preferred from the standpoint of the excellent rebound resilience, the oil resistance, and the like.

Examples of the olefin thermoplastic elastomer include a mixture containing a hard segment formed of a propylene resin and a soft segment formed of ethylene rubber, and a multi-block copolymer containing a hard segment formed of a polyethylene block and a soft segment formed of an ethylene-α-olefin copolymer block.

In the mixture containing a propylene resin and ethylene rubber, examples of the propylene resin include a propylene homopolymer and a copolymer of propylene and ethylene or an α-olefin having from 4 to 8 carbon atoms. Examples of the ethylene rubber include a copolymer of ethylene and an α-olefin having from 3 to 8 carbon atoms, and a copolymer obtained by further copolymerizing a non-conjugated diene, such as 5-vinyl-2-norbornene, 5-ethylidene-2-norbornene, 5-methylene-2-norbornene, and dicyclopentadiene.

In the multi-block copolymer of a polyethylene block and an ethylene-α-olefin copolymer block, examples of the polyethylene block include an ethylene homopolymer and a copolymer of ethylene and an α-olefin having from 3 to 8 carbon atoms. Examples of the ethylene-α-olefin copolymer block include a block of a copolymer of ethylene and an α-olefin having from 3 to 20 carbon atoms, and examples of the α-olefin to be copolymerized with ethylene include propylene, 1-butene, 1-pentene, 1-hexene, 1-heptene, 1-octene, 1-nonene, 1-decene, 3-methyl-1-butene, and 4-methyl-1-pentene, in which propylene, 1-butene, 1-hexene, and 1-octene are preferred, and 1-octene is particularly preferred. The proportion of the ethylene component in the polyethylene block is preferably 95% by weight or more, and more preferably 98% by weight or more. The proportion of the α-olefin component in the ethylene-α-olefin copolymer block is preferably 5% by weight or more, more preferably 10% by weight or more, and further preferably 15% by weight or more, based on the total amount of the ethylene-α-olefin copolymer block.

The proportion of the ethylene-α-olefin copolymer block in the multi-block copolymer is preferably from 1 to 99% by weight, and more preferably from 5 to 95% by weight, based on the total amount of the multi-block copolymer.

In the multi-block copolymer, the polyethylene block and the ethylene-α-olefin copolymer block are preferably arranged in the form of straight chain. The blocks may be regularly arranged, and is preferably randomly arranged.

The olefin thermoplastic elastomer in the present invention may be commercially available products, which may be appropriately selected and used, such as "Thermorun", a trade name, produced by Mitsubishi Chemical Corporation, "Milastomer", a trade name, produced by Mitsui Chemicals, Inc., "Sumitomo TPE", a trade name, produced by Sumitomo Chemical Co., Ltd., and "Infuse", a trade name, produced by Dow Chemical Company, and among these, a multi-block copolymer containing a polyethylene block and an ethylene-α-olefin copolymer block, represented by "Infuse", is preferably used as the base material of the expanded olefin thermoplastic elastomer beads from the standpoint of the achievement of the intended objects.

Examples of the urethane thermoplastic elastomer mainly include an ester series and an ether series, each having a structure containing a soft segment formed of a flexible polymer containing an ether group, an ester group, a carbonate group, or the like, and a hard segment formed of a chain extender, such as a short chain glycol, and a diisocyanate bonded to each other via an urethane bond, which form a block copolymer. The urethane thermoplastic elastomer may be an ether series or an ester series, which may be appropriately selected depending on the properties demanded for the resulting expanded beads molded article.

The ester series is preferred due to the advantage of the higher mechanical strength and the excellent adhesiveness to another resin material in in-mold molding. The ester series is also preferred from the standpoint that the expansion ratio of the expanded beads can be readily increased due to the good affinity with carbon dioxide, which is preferably used as a blowing agent.

The urethane thermoplastic elastomer may be commercially available products, which may be appropriately selected and used, such as "Elastollan", a trade name, produced by Takeda Badische Urethane Industries, Ltd., "Miractran", a trade name, produced by Nippon Miractran Co., Ltd., "Resamine P", a trade name, produced by Dainichiseika Color & Chemicals Mfg. Co., Ltd., "U-Fine P", a trade name, AGC Chemicals Company, and "Fortimo", a trade name, produced by Mitsui Chemicals, Inc.

The melt flow rate of the thermoplastic elastomer as the base material of the expanded beads used in the present invention is preferably from 2 to 10 [g/10 min], more preferably from 3 to 8 [g/10 min], and further preferably from 4 to 7 [g/10 min], for the olefin series, and is preferably 40 [g/10 min] or less, more preferably from 0.1 to 30 [g/10 min], and further preferably from 0.3 to 20 [g/10 min], for the urethane series.

The melt flow rate is preferably in the aforementioned range from the standpoint of the fusion bondability of the expanded beads in in-mold molding, and the shape recovery (restoration) property of the expanded beads molded article obtained through in-mold molding of the expanded beads. The melt flow rate is a value that is measured according to JIS K7210-1:2014 at a temperature of 190°C and a load of 2.16 kg for the olefin series or at a temperature of 190°C and a load of 10 kg for the urethane series.

The Shore A hardness of the thermoplastic elastomer is preferably from 80 to 95, more preferably from 80 to 90, and particularly preferably from 85 to 90, in the case where the thermoplastic elastomer is the urethane thermoplastic elastomer, and is preferably from 65 to 95, more preferably from 75 to 90, further preferably from 80 to 90, and particularly preferably from 85 to 90, in the case where the thermoplastic elastomer is the olefin thermoplastic elastomer.

In the case where the Shore A hardness of the thermoplastic elastomer is in the aforementioned range, the effect of suppressing the shrinkage of the expanded beads immediately after the production of the expanded beads and the effect of enhancing the shape stability of the expanded beads molded article after the in-mold molding of the expanded beads, and the effect of enhancing the flexibility and the rebound resilience of the expanded beads molded article can be achieved in a well balanced manner. The Shore A hardness is a value that is measured according to JIS K6253-3. Specifically, the value may be measured by using a type A durometer, such as Digital Hardness Meter, produced by Toyo Seiki Seisaku-sho, Ltd., under condition of a temperature of 23°C and a relative humidity of 50%, for a flat surface of a test specimen, at a read timing of a measured value of 3 seconds.

The density of the thermoplastic elastomer is preferably from 700 to 1,000 g/L, and more preferably from 800 to 900 g/L, for the olefin series, and is preferably from 1,000 to 1,300 g/L, and more preferably from 1,050 to 1,250 g/L, for the urethane series. The density is a value that is based on ASTM D792. The melting point of the elastomer is preferably from 110 to 130°C, and more preferably from 115 to 125°C. In the case where the melting point is in the range, the compression set at 50°C can be decreased. The melting point can be obtained from the peak temperature of the endothermic peak determined by the DSC curve obtained in such a manner that based on the heat flux differential scanning calorimetric measurement method described in JIS K7121 (1987), a specimen is heated from 30°C to 200°C at a heating rate of 10°C/min, then cooled to 30°C at a cooling rate of 10°C/min, and again heated from 30°C to 200°C at a heating rate of 10°C/min. In the case where plural endothermic peaks appear in the DSC curve, the peak temperature of the endothermic peak that has the larges area is designated as the melting point. The flexural modulus of the elastomer is preferably from 10 to 30 MPa, and more preferably from 12 to 30 MPa. The flexural modulus is a value based on JIS K7171:2008.

The thermoplastic elastomer as the base material of the expanded beads may contain additives added thereto in such a range that does not impair the objects and effects of the present invention. Examples of the additives include a cell nucleating agent, an antioxidant, an ultraviolet ray absorbent, an antistatic agent, a flame retardant, a flame retarding assistant, a metal deactivator, a conductive filler, a colorant, and a crosslinking agent. Specific examples of the cell nucleating agent include inorganic powder, such as zinc borate, talc, calcium carbonate, borax, aluminum hydroxide, silica, zeolite, and carbon, and organic powder, such as a phosphoric acid nucleating agent, a phenol nucleating agent, an amine nucleating agent, and polyethylene fluoride resin powder. The amount of the additives in total is preferably 20 parts by weight or less, more preferably 10 parts by weight or less, and further preferably 5 parts by weight or less, per 100 parts by weight of the thermoplastic elastomer. The additives are generally used in a minimum necessary amount. The additives may be contained in the elastomer, for example, by supplying and kneading in an extruder along with the thermoplastic elastomer in the production process of the expanded beads.

(Method for producing Expanded Thermoplastic Elastomer Beads)

The method for producing the expanded thermoplastic elastomer beads will be described.

The expanded beads in the present invention may be produced by a method including a step (A), a step (B), a step (C), and a step (D) described below. The expanded beads in the present invention are not limited to ones that are produced by the following production method.

[Step (A)]

In the step (A), thermoplastic elastomer beads (which may be hereinafter referred to as "polymer beads") are dispersed in a dispersion medium in a pressure tight vessel.

The polymer beads may be produced by a known method, such as a method, in which a thermoplastic elastomer is supplied and kneaded in an extruder to provide a molten kneaded product, the molten kneaded product is extruded from the extruder as a strand, and the strand is cut into a size suitable for the production of the expanded beads. For example, in the aforementioned method, a molded product obtained by extruding the molten kneaded product as a strand is cooled with water and then cut into a prescribed length to provide the polymer beads. For cutting into a prescribed length, for example, a strand cutting method may be employed. In addition, the polymer beads may be obtained by a hot cutting method of cutting the molten kneaded product immediately after the extrusion, an underwater cutting method of cutting in water, or the like.

The average weight per one of the polymer beads is generally preferably from 0.01 to 10 mg, and more preferably from 0.1 to 5 mg. The average weight of the polymer beads is a value obtained by dividing the weight [mg] of the randomly selected 100 polymer beads by 100.

The dispersion medium used in the step (A) is not particularly limited, as far as the dispersion medium does not dissolve the polymer beads. Examples of the dispersion medium include water, ethylene glycol, glycerin, methanol, and ethanol. The dispersion medium is preferably water.

The polymer beads are dispersed in the dispersion medium. For example, the dispersion medium is agitated with an agitator to disperse the polymer beads in the dispersion medium.

In the step (A), a dispersant is generally added to the dispersion medium. Examples of the dispersant include an organic dispersant, such as polyvinyl alcohol, polyvinylpyrrolidone, and methyl cellulose, and a sparingly soluble inorganic salt, such as aluminum oxide, zinc oxide, kaolin, mica, magnesium phosphate, and tricalcium phosphate. A surfactant may be further added to the dispersion medium. Examples of the surfactant include sodium oleate, sodium dodecylbenzenesulfonate, and anionic surfactants and nonionic surfactants that are ordinarily used in suspension polymerization.

The pressure tight vessel used in the step (A) is not particularly limited, as far as it is a closable pressure tight vessel. The polymer beads are heated in the subsequent step (B) to increase the pressure in the pressure tight vessel, and therefore the pressure tight vessel can necessarily resist against the increase of the pressure in the step (B). Examples of the pressure tight vessel include an autoclave.

In the step (A), a crosslinking agent may be used for crosslinking the polymer beads depending on necessity. The crosslinking agent may be added to the dispersion medium in advance, or may be added to the dispersion medium after dispersing the polymer beads therein. The crosslinking agent is not particularly limited, as far as it can crosslink the polymer beads. Examples of the crosslinking agent include a peroxide, such as dicumyl peroxide, t-butyl peroxybenzoate, and 1,1-bis-t-butylperoxycyclohexane. These compounds may be used solely or as a combination of two or more kinds thereof. The amount of the crosslinking agent mixed is preferably from 0.6 to 1 part by weight, more preferably from 0.65 to 0.95 part by weight, and further preferably from 0.7 to 0.9 part by weight, per 100 parts by weight of the polymer beads. The crosslinking method of the polymer beads is not limited to the method using an organic peroxide, and crosslinked polymer beads or expanded crosslinked beads can be obtained by performing the crosslinking treatment by other known methods, such as an electron beam crosslinking method.

[Step (B)]

In the step (B), the polymer beads dispersed in the dispersion medium in the step (A) are heated in a closed vessel to such a temperature that the thermoplastic elastomer of the polymer beads is softened, but the polymer beads are not coagulated. The heating temperature is, for example, in a range of from 100 to 170°C.

[Step (C)]

In the step (C), a blowing agent for expanding the polymer beads is added to the dispersion medium in the pressure tight vessel after the step (B) or simultaneously with the step (B), so as to impregnate the polymer beads with the blowing agent. The temperature for impregnating with the blowing agent is not particularly limited and is preferably such a temperature that the polymer beads are softened without coagulation, and the temperature is, for example, in a range of from 100 to 170°C.

The blowing agent used in the step (C) is not particularly limited, as far as the polymer beads can be expanded therewith. Examples of the blowing agent include an inorganic physical blowing agent, such as air, nitrogen, carbon dioxide, argon, helium, oxygen, and neon, and an organic physical blowing agent, such as an aliphatic hydrocarbon, e.g., propane, n-butane, isobutane, n-pentane, isopentane, and n-hexane, an alicyclic hydrocarbon, e.g., cyclohexane and cyclopentane, a halogenated hydrocarbon, e.g., 1,3,3,3-tetrafluoropropene and 1-chloro-3,3,3-trifluoropropene, and a dialkyl ether, e.g., dimethyl ether, diethyl ether, and methyl ethyl ether. Among these, an inorganic physical blowing agent is preferred, nitrogen, air, and carbon dioxide are more preferred, and carbon dioxide is particularly preferred, from the standpoint of the safety and the like. These blowing agents may be used alone or as a combination of two or more kinds thereof. The amount of the blowing agent mixed may be determined in consideration of the apparent density of the target expanded beads, the kind of the thermoplastic elastomer, the kind of the blowing agent, and the like, and is generally preferably from 5 to 50 parts by weight for the organic physical blowing agent, and preferably from 0.5 to 30 parts by weight for the inorganic physical blowing agent, per 100 parts by weight of the elastomer.

[Step (D)]

In the step (D), the expandable polymer beads in a softened state impregnated with the blowing agent in the step (C) are discharged to an atmosphere having a lower pressure than the pressure in the pressure tight vessel, so as to produce the expanded beads. Specifically, while retaining the pressure in the pressure tight vessel to a pressure of the vapor pressure of the blowing agent or higher, one end of the pressure tight vessel below the water surface is opened to discharge the expandable polymer beads containing the blowing agent along with the dispersion medium, from the pressure tight vessel to an atmosphere having a lower pressure than the pressure in the pressure tight vessel, generally ordinary pressure, so as to expand the expandable polymer beads, thereby producing expanded beads. The impregnating step (step (C)) and the expanding step (step (D)) are preferably performed as one sequence in the single pressure tight vessel.

The method for producing the expanded beads using a pressure tight vessel has been described as the production method, but the method for producing the expanded beads is not limited to the aforementioned production method. Examples of the methods that can be used include a method, in which a thermoplastic elastomer, a cell nucleating agent, and the like are supplied and kneaded in an extruder, then a blowing agent is pressed into the extruder to make the blowing agent to be contained in the thermoplastic elastomer, and then the expandable thermoplastic elastomer in a softened state is extruded and expanded from a die attached to the tip of the extruder as a strand, which is cut to produce expanded beads, and a method, in which after performing the steps (A) to (C), the interior of the pressure tight vessel is depressurized and cooled, then the polymer beads containing the blowing agent are taken out from the vessel, and dehydrated and dried, and then the polymer beads containing the blowing agent are heated with a heating medium to cause expansion, thereby producing expanded beads.

The average bead diameter of the expanded beads in the present invention is preferably from 0.5 to 10 mm, more preferably from 1 to 8 mm, and further preferably from 2 to 5 mm. In the case where the average bead diameter of the expanded beads is in the range, the expanded beads can be easily produced, and the expanded beads can be easily filled in a metal mold in the in-mold molding of the expanded beads. The average bead diameter of the expanded beads can be controlled, for example, by the amount of the blowing agent, the expanding condition, the bead diameter of the polymer beads, and the like.

The apparent density of the expanded beads in the present invention is preferably from 50 to 280 g/L, more preferably from 50 to 250 g/L, further preferably from 60 to 180 g/L, and particularly preferably from 80 to 140 g/L. The bulk density of the expanded beads in the present invention may be 200 g/L or less, preferably from 30 to 175 g/L, more preferably from 30 to 160 g/L, further preferably from 35 to 120 g/L, and particularly preferably from 50 to 90 g/L. In the case where the apparent density or the bulk density of the expanded beads is in the range, the light-weight property, the flexibility, and the rebound property of the expanded beads molded article produced through in-mold molding of the expanded beads can be further improved.

The average bead diameter and the apparent density of the expanded beads can be measured in the following manner. The group of the expanded beads is allowed to stand under condition of a relative humidity of 50%, a temperature of 23°C, and ordinary pressure for 2 days. Subsequently, a measuring cylinder having water at 23°C placed therein is prepared, an arbitrary amount of the group of the expanded beads (weight of the group of the expanded beads: W1) after allowing to stand for 2 days is immersed in water in the measuring cylinder with a tool, such as a metallic mesh. The volume V1 [L] of the group of the expanded beads read from the elevation of the water surface is measured while taking the volume of the tool, such as a metallic mesh, into consideration. The volume V1 is divided by the number (N) of the expanded beads placed in the measuring cylinder (V1/N) to calculate the average volume per one expanded bead. The diameter of the virtual true sphere that has the same volume as the resulting average volume is designated as the average bead diameter [mm] of the expanded beads. The weight W1 [g] of the group of the expanded beads placed in the measuring cylinder is divided by the volume V1 (W1/V1) to provide the apparent density of the expanded beads. The bulk density of the expanded beads can be obtained in such a manner that the group of the expanded beads is allowed to stand under condition of a relative humidity of 50%, a temperature of 23°C, and ordinary pressure for 2 days. Subsequently, a vacant measuring cylinder is prepared, an arbitrary amount of the group of the expanded beads (weight of the group of the expanded beads: W2) after allowing to stand for 2 days is placed in the measuring cylinder, and the bottom of the measuring cylinder is tapped on the floor several times to stabilize the filled height of the group of the expanded beads in the measuring cylinder. The volume V2 [L] of the group of the expanded beads shown by the scale of the measuring cylinder is measured. The weight W2 [g] of the group of the expanded beads placed in the measuring cylinder is divided by the volume V2 (W2/V2) to provide the bulk density of the expanded beads.

The expanded beads in the present invention may be expanded crosslinked thermoplastic elastomer beads or non-crosslinked ones, and expanded crosslinked thermoplastic elastomer beads are preferred from the standpoint of the in-mold moldability of the expanded beads. The in-mold molded article of the expanded crosslinked thermoplastic elastomer beads may be excellent in the dimensional stability of the expanded beads molded article and the fusion bondability among the expanded beads. In the case where the expanded thermoplastic elastomer beads are olefin expanded thermoplastic elastomer beads, in particular, the boiling xylene insoluble content (i.e., the insoluble content by the boiling xylene extraction method) of the expanded beads, which is the so-called gel fraction of the expanded beads, is 60% by weight or less (including 0), more preferably from 5 to 60% by weight, further preferably from 10 to 60% by weight, still further preferably from 30 to 60% by weight, and particularly preferably from 40 to 55% by weight, from the aforementioned standpoint.

The gel fraction can be controlled by, in addition to the amount of the crosslinking agent added, the agitation condition, the heating condition, and the like in crosslinking the thermoplastic elastomer beads in the pressure tight vessel. The gel fraction by the boiling xylene extraction method (i.e., the boiling xylene insoluble content) is a value that is obtained in such a manner that approximately 1 g of the group of the expanded beads is weighed as a specimen (the weight of the weighed specimen: G1 [g]) and boiled in 100 g of xylene for 6 hours, and immediately filtered with a metallic mesh of 100 mesh, then the boiling xylene insoluble content remaining on the metallic mesh is dried in a vacuum dryer at 80°C for 8 hours and weighed for the weight of the insoluble content (the weight of the weighed boiling xylene insoluble content: G2 [g]), and the gel fraction is obtained according to the following expression (3).

$$\text{Gel fraction [\% by weight]} = (\text{G2 [g]/G1 [g]}) \times 100 \qquad (3)$$

[Method for producing Expanded Beads Molded Article]

In the method for producing an expanded beads molded article of the present invention, the particular expanded thermoplastic elastomer beads are used, and in-mold molding is performed where the expanded beads are filled in the mold with a higher internal pressure of the expanded beads and/or a higher compressed state, in which the filled amount M [g] of the expanded beads in the cavity satisfies the following expressions (1) and (2), than the ordinary in-mold molding method, thereby providing the target expanded beads molded article:

$$0.9 \cdot V \cdot Bd \leq M \qquad (1)$$

$$4.2 \cdot Bd^{-0.23} \leq IP + M/(V \cdot Bd) \leq 8.0 \cdot Bd^{-0.23} \qquad (2)$$

wherein V represents the inner capacity [L] of the cavity of the metal mold, Bd represents the bulk density [g/L] of the expanded beads, and IP represents the internal pressure [$10^{-1}$ MPa] of the expanded beads.

The particular expanded beads used are expanded thermoplastic elastomer beads having a closed cell ratio of 70% or more, preferably 80% or more, and more preferably 90% or more, a bulk density Bd of 200 g/L or less, and an internal pressure IP of preferably from 0 to 2.0 [$10^{-1}$ MPa] (including 0), more preferably from 0 to 1.6 [$10^{-1}$ MPa] (including 0), and particularly preferably from 0 to 1.2 [$10^{-1}$ MPa] (including 0).

In the present invention, the expanded beads having an internal pressure IP of from 0 to 2.0 [$10^{-1}$ MPa] (including 0) mean that the expanded beads include expanded beads before the in-mold molding that are not subjected to an operation increasing the gas pressure inside the expanded beads to increase the expanding force of the expanded beads in heating the expanded beads, i.e., a so-called non-operation imparting an internal pressure to the expanded beads, and expanded beads before the in-mold molding that are applied to the operation imparting an internal pressure of the expanded beads, and the upper limit in imparting an internal pressure to the expanded beads is preferably 2.0 [$10^{-1}$ MPa]. The operation imparting an internal pressure to the expanded beads is expected to achieve the effect of enhancing the expanding force of the expanded beads in heating, with which the in-mold moldability is generally enhanced, but the expanded thermoplastic elastomer beads used in the present invention are an excellent elastic body, and therefore in the case where the expanding force is too large, it is necessary to take care of the cases where the heating medium, such as steam, in the in-mold molding may be prevented from being spread over the group of the expanded beads in the mold, and the expanded beads molded article obtained through the in-mold molding may be deteriorated in the dimensional stability and appearance. For exhibiting the effect of imparting an internal pressure to the expanded beads, the internal pressure (IP) is preferably controlled to a range of from 0.3 to 2.0 [$10^{-1}$ MPa].

The expanded beads that are not subjected to the operation imparting an internal pressure or the expanded beads that are only little applied to the operation have an internal pressure IP in a range of from 0 to 0.2 [$10^{-1}$ MPa] (including 0), and in the present invention, the molding cycle in the in-mold molding can be shortened by performing in-mold molding using the expanded beads having an internal pressure IP of from 0 to 0.2 [$10^{-1}$ MPa] (including 0) under the aforementioned condition.

In the case where the closed cell ratio is too small, the in-mold molding performed with a high compression ratio satisfying the condition of the expressions (1) and (2) may make the restorability of the expanded beads insufficient, and an expanded beads molded article having a poor appearance may be obtained due to the insufficient fusion bondability among the expanded beads. In the case where the bulk density of the expanded beads exceeds 200 g/L, it may be difficult to perform a compression molding method by highly compressing the expanded beads.

The expression (1) shows the compression filling ratio (X (= M/(V·Bd)) [-] of the expanded beads filled in a state that the expanded beads are compressed in the cavity of the metal mold, and the filling ratio of 0.9 [-] or more means that even in the case where the internal pressure IP is imparted to the expanded beads, the minimum necessary filling ratio is 0.9 [-], as shown in Fig. 1. The expanded thermoplastic elastomer beads have poor slippage among the expanded beads due to the large friction among them, and are difficult to fill in the cavity of the metal mold as compared to general purpose resins, such as a polystyrene resin, and therefore the filling ratio becomes less than 0.9 [-] unless the particular filling method, such as the compression filling method and the like in the present invention, is employed. The filling ratio, for example, of 2 [-] means that the expanded beads are filled in a compressed state in the cavity in a weight approximately twice the filled weight of the expanded beads in the case where the ideal amount of the expanded beads are filled in the cavity without compression, which results in that by the filling, the expanded beads in the cavity receive the restoring force approximately twice the expanded beads filled in the cavity without compression. In practice, the relationship between the filling ratio and the ideal amount of the expanded beads capable of being filled in the cavity is necessarily considered with the volume expansion of the expanded beads in imparting the internal pressure to the expanded beads, and the deterioration in filling property due to the frictional resistance among the expanded beads, and therefore it is even difficult to fill the ideal amount of the expanded beads in the cavity unless the particular filling method, such as the compression filling, is employed. The compression filling ratio (X (= M/(V·Bd)) [-] of the expanded beads is preferably 1.2 [-] or more, and more preferably 1.4 [-] or more, from the standpoint of the enhancement of the secondary expansion property of the expanded beads in the in-mold molding and the reduction of the molding cycle.

The expression (2) shows the expansion force of the expanded beads caused by the sum of the internal pressure IP [$10^{-1}$ MPa] of the expanded beads and the compression filling ratio M/(V·Bd) [-] thereof, that is the resultant force of the expansion force by the increase of the internal pressure of the expanded beads and the restoring force by the filling in a compressed state, and the value (IP + M/(V·Bd)) of from $4.2 \cdot Bd^{-0.23}$ to $8.0 \cdot Bd^{-0.23}$ means that in the case where the expanded beads have Bd of 50 g/L for example, the expanded beads compressively filled in the cavity are conditioned to have such a state that a volume increasing capability of approximately from $4.2 \cdot 50^{-0.23}$ to $8.0 \cdot 50^{-0.23}$ times, i.e., approximately from 1.7 to 3.3 times, through heating in the suitable in-mold molding is imparted thereto by the internal pressure imparted and the compression filling. The expressions $4.2 \cdot Bd^{-0.23}$ and $8.0 \cdot Bd^{-0.23}$ are empirical expressions of curves showing the lower limit (shown by the lower curve) and the upper limit (shown by the upper curve) of (IP + M/(V·Bd)) with respect to Bd, with which a favorable expanded beads molded article can be obtained, obtained based on the experiments performed by the present inventors, as shown in Fig. 5 with (IP + M/(V·Bd)) as the ordinate and Bd as the abscissa.

The satisfaction of the expressions (1) and (2) of the present invention means that assuming that the bulk density is Bd [g/L], the compression filling ratio (X) and the internal pressure (IP) of the expanded beads in the in-mold molding are in the range shown by the hatched area in Fig. 1. In Fig. 1, in the case where the internal pressure of the expanded beads is too high, in the case where the compression filling ratio is too high, and in the case where the sum of the compression filling ratio and the internal pressure of the expanded beads is too large, there may be a problem that the fusion bonding among the expanded beads is insufficient inside the expanded beads molded article, and a problem that the surface smoothness of the expanded beads molded article is insufficient to deteriorate the appearance thereof.

In the case where the internal pressure of the expanded beads is too low, and in the case where the compression filling ratio is too low, on the other hand, there may be a problem that the fusion bonding among the expanded beads is insufficient, and a problem that depressions (voids) among the expanded beads occur on the surface of the expanded beads molded article. In the present invention, the upper limit of the internal pressure of the expanded beads may be necessarily lower than the upper limit of the internal pressure of expanded beads of expanded polypropylene resin beads or expanded polystyrene beads since the in-mold moldability may be lowered mainly by the flexibility of the thermoplastic elastomer constituting the expanded beads. Furthermore, the expanded thermoplastic elastomer beads are difficultly controlled in secondary expansion property as described above, which makes the in-mold molding of the expanded beads further difficult. Even under the circumstances, the present invention can provide a favorable expanded beads molded article by using the particular expanded beads and by performing the in-mold molding under the condition satisfying the expressions (1) and (2).

In the present invention, furthermore, the relationship between the compression filling ratio and the internal pressure of the expanded beads in the in-mold molding preferably satisfies both the following expressions (9) and (10) from the standpoint of the production of the expanded beads molded article that are particularly excellent in appearance and fusion bondability.

$$0.9 \cdot V \cdot Bd \leq M \leq 3.0 \cdot V \cdot Bd \qquad (9)$$

$$4.8 \cdot Bd^{-0.23} \leq IP + M/(V \cdot Bd) \leq 6.5 \cdot Bd^{-0.23} \qquad (10)$$

The expanded beads used in the present invention have the closed cell ratio that is conditioned to the aforementioned range. The closed cell ratio of the expanded beads may be measured in such a manner that a group of the expanded beads of a bulk volume of approximately 20 cm$^3$ is used as a measurement specimen, the weight W [g] of the specimen is measured, and the apparent volume Va [cm$^3$] of the specimen is measured by the submersion method. After sufficiently drying the measurement specimen, the true volume Vx [cm$^3$] thereof (i.e., the sum of the volume of the resin constituting the expanded beads and the total volume of the closed cells inside the expanded beads) is measured according to ASTM D2856-70, Procedure C, by using Air Pycnometer 930 (produced by Toshiba Beckman Co., Ltd.). When the density ρ [g/cm$^3$] of the thermoplastic elastomer, the closed cell ratio [%] is calculated by the following expression (4). The specimen of the expanded beads used for the measurement of the closed cell ratio is obtained in such a manner that the expanded beads are placed in a sealed vessel and subjected to a compression treatment at 30°C with compressed air of 0.3 MPa(G) for 12 hours, then after releasing the pressure, allowed to stand at 40°C under ordinary pressure for 24 hours, and then aged by allowing to stand in a constant temperature room under ordinary pressure at a relative humidity of 50% and 23°C for 10 days.

$$\text{Closed cell ratio [\%]} = ((Vx \cdot W/ρ)/(Va \cdot W/ρ)) \times 100 \qquad (4)$$

The use of the expanded beads showing a closed cell ratio within the aforementioned range in the present invention is an essential requirement for sufficiently exhibiting the objects and effects of the present invention, i.e., the production of a favorable expanded beads molded article, by employing the constitution of the present invention including the pressure in the expanded beads within the aforementioned range and the filling the expanded beads in the mold with a compression ratio within the aforementioned range, and the like. The method for increasing the pressure in the expanded beads by pressurizing the expanded beads with a gas for pressurizing employed in the present invention may be the method described in JP S51-22951 B, JP S57-12035 A, or the like.

The pressure IP in the expanded beads is calculated by the following expression (5).

$$\text{Internal pressure of expanded beads } [10^{-1} \text{ MPa}]$$
$$= (\text{increased gas amount } [g] \times 0.082 \times T\,[K] \times 1.0332)/(\text{molecular weight of}$$
$$\text{pressurizing gas } [g/mol] \times \text{volume of gas in expanded beads } [L]) \qquad (5)$$

The increased gas amount is the difference between the weight of the expanded beads after the pressurization and the weight of the expanded beads before the pressurization used for the measurement of the pressure IP in the expanded beads, T is the atmospheric absolute temperature, and the volume of the gas in the expanded beads is a value calculated by the following expression (6). The molecular weight of the gas is 44 g/mol for the case where the gas is carbon dioxide, and 28.9 g/mol for the case where the gas is air.

$$\text{Volume of gas in expanded beads } [L]$$
$$= (\text{weight of expanded beads before pressurization } [g] / \text{ density of base}$$
$$\text{material of expanded beads (thermoplastic elastomer) } [g/cm^3]) \times (\text{density of base}$$
$$\text{material of expanded beads (thermoplastic elastomer) } [g/cm^3] / \text{ apparent density}$$
$$\text{of expanded beads } [g/cm^3] - 1) / 1,000 \qquad (6)$$

In the case where the expanded beads are compressively filled in the cavity of the metal mold with a gas for compression, the pressure in the cavity of the metal mold in the pressurized state is preferably from 0.08 to 1.0 MPa(G), and more preferably from 0.1 to 0.5 MPa(G). It is further preferred that the pressure of the gas for compression in a pressurization hopper is controlled to higher by from 0.01 to 0.2 MPa(G) than the pressure in the cavity of the metal mold in the pressurized state from the standpoint of the filling property of the expanded beads in the metal mold by utilizing the differential pressure.

The gas for compression and gas used for pressurizing the cavity of the metal mold may be an inorganic gas, an organic gas, or a mixed gas thereof, and an inorganic gas, such as air, nitrogen, and carbon dioxide, is preferred from the standpoint of the safety and the economical efficiency.

In the state where the expanded beads are compressed with the gas for compression in the cavity of the metal mold, the pressure in the cavity of the metal mold in the pressurized state is released to make the pressure in the cavity of the metal mold to ordinary pressure or substantially ordinary pressure, thereby restoring the compressed expanded beads. Even after the restoration, there are voids, through which the heating medium can sufficiently pass among the expanded beads in heating the expanded beads with the heating medium in the subsequent step, retained among the expanded beads.

The expanded beads filled in the metal mold are heated with the heating medium, such as steam, subsequently introduced to the metal mold, and thereby expanded and fusion bonded to each other at the surfaces of the expanded beads adjacent to each other, so as to form an expanded beads molded article. Subsequently, the expanded beads molded article is cooled, taken out from the cavity of the metal mold, and subjected to an aging step, thereby providing the target expanded beads molded article. Preceding the step of introducing the heating medium to the metal mold to heat and mold the expanded beads, an operation displacing the gas existing in the gaps among the expanded beads filled in the metal mold by steam, i.e., a so-called displacing step, is preferably performed.

In the in-mold molding step, in the case where the heating medium introduced to the metal mold is steam, the saturated vapor pressure thereof (i.e., the maximum value of the saturated vapor pressure of steam introduced to the metal mold) is preferably from 0.05 to 0.8 MPa(G), and more preferably from 0.15 to 0.5 MPa(G).

The heating procedure with the heating medium in the in-mold molding method is not particularly limited, and the procedure described below is preferred from the standpoint of the fusion bondability of the expanded beads mutual and the production of the expanded beads molded article excellent in appearance, properties, and the like.

Preferred examples of the procedure include such a heating procedure that the metal mold includes one pair of metal molds of a positive mold and a negative mold each having a steam chamber, and the step of supplying the heating medium into the metal mold to heat the expanded beads, includes, performed in this order: a unidirectional heating step of supplying steam to the steam chamber of the positive mold or the negative mold, making the steam to pass through a cavity formed by combining the positive mold and the negative mold, and flowing the steam into the steam chamber of the other one of the molds; a reverse unidirectional heating step of supplying steam to the steam chamber of the other one of the molds, making the steam to pass through the cavity, and flowing the steam into the steam chamber of the mold, to which the steam has been supplied in the unidirectional heating step; and a main heating step of supplying steam simultaneously to the steam chambers of the positive mold and the negative mold, so as to fusion bond the expanded beads to each other. As for the switching states of the draining valves of the positive mold and the negative mold in the aforementioned heating procedure, it suffices that at least the draining value of the chamber, to which steam is supplied, is closed in the unidirectional heating and the reverse unidirectional heating.

According to the method of the present invention, an excellent expanded thermoplastic elastomer beads molded article showing the following properties can be obtained.

<Characteristics of Expanded Thermoplastic Elastomer Beads Molded Article>

The density of the expanded thermoplastic elastomer beads molded article is preferably from 40 to 280 g/L, more preferably from 50 to 260 g/L, further preferably from 60 to 220 g/L, and particularly preferably from 80 to 150 g/L. In the case where the density of the expanded beads molded article is in the range, the expanded beads molded article may be excellent in the light-weight property, the flexibility, the rebound property, and the tensile characteristics in a well balanced manner, and particularly excellent in the restorability. The density [g/L] of the expanded beads molded article can be obtained by dividing the weight W [g] of the molded article by the volume V thereof (W/V).

The compression stress at 50% strain of the expanded beads molded article is preferably 350 kPa or less, more preferably 300 kPa or less, and further preferably 250 kPa or less. With a lower compression stress, the expanded beads molded article may have better flexibility, and is suitable for such purposes as a seat cushioning material, a sports pad material, and a shoe sole material. The compression stress at 50% strain of the expanded beads molded article may be measured in such a manner that according to JIS K6767:1999, a test piece in a cuboid shape of 50 mm in length $\times$ 50 mm in width $\times$ 20 mm in thickness is cut out from the expanded beads molded article, and a load at 50% strain is obtained at a compression rate of 10 mm/min under an environment of a temperature of 23°C and a relative humidity of 50%, and divided by the pressure receiving area of the test piece, so as to calculate the compression stress.

The maximum tensile stress of the expanded beads molded article is preferably 0.25 MPa or more, more preferably 0.3 MPa or more, and further preferably 0.4 MPa or more. The upper limit of the maximum tensile stress may not be determined, and may be approximately 1 MPa. The tensile breaking elongation of the expanded beads molded article is preferably 80% or more, more preferably 100% or more, and further preferably 150% or more. In the case where the tensile breaking elongation is in the range, the expanded beads molded article may be suitable for the aforementioned purposes due to the excellent tensile characteristics thereof. The maximum tensile stress and the tensile breaking elongation of the expanded beads molded article may be measured in such a manner that according to JIS K6767:1999, a cut piece is produced by cutting the expanded beads molded article with a vertical slicer into a size of 120 mm in length $\times$ 25 mm in width $\times$ 10 mm in thickness with all the faces thereof being cut surfaces. The cut piece is cut out into a dumbbell specimen No 1 (having a measurement site of 40 mm in length $\times$ 10 mm in width $\times$ 10 mm in thickness) with a jig saw, which is designated as a test piece. The test piece is subjected to a tensile test at a test rate of 500 mm/min, and the maximum tensile stress and the tensile breaking elongation are measured. The tensile breaking elongation is obtained according to the following expression (7) based on the length L [mm] of the test piece at the tensile breakage.

$$\text{Tensile breaking elongation [\%]} = L/40 \times 100 \qquad (7)$$

The rebound modulus of the expanded beads molded article is preferably 45% or more, more preferably 50% or more, and further preferably 60% or more. The upper limit thereof may be approximately 90%. In the case where the rebound modulus is in the range, the expanded beads molded article may have excellent rebound property, and can be suitably applied to such purposes as a seat cushioning material, a sports pad material, and a shoe sole material and the like. The rebound modulus of the expanded beads molded article may be measured in such a manner that a test piece of 50 mm in length $\times$ 50 mm in width $\times$ 40 mm in thickness (provided that in the case where the thickness of the expanded beads molded article is less than 40 mm, plural sheets thereof are laminated to make a thickness of 40 mm) is cut out from the expanded beads molded article with at least one face of the flat faces (50 mm $\times$ 50 mm) having the skin surface, and placed on a flat surface with the skin surface of the test piece upward, a falling ball test is performed by falling a iron ball of 254.6 g from a height of 600 mm, the rebound height H [mm] of the iron ball rebounded from the test piece is measured, and the rebound modulus is obtained according to the following expression (8).

$$\text{Rebound modulus [\%]} = \text{H}/600 \times 100 \qquad (8)$$

Examples

The present invention will be described in more detail with reference to examples, but the present invention is not limited to the examples and the property values.

[Examples 1-1 to 1-9 and Comparative Example 1]

<Production of Expanded Olefin Thermoplastic Elastomer (TPO) Beads>

100 parts by weight of an ethylene-$\alpha$-olefin multi-block copolymer ("Infuse", a trade name, Model No. 9530, produced by Dow Chemical Company) having a polyethylene block and an ethylene-$\alpha$-olefin copolymer block, having a density of 887 g/L, a melting point of 120°C, a melt flow rate of 5.4 g/10 min (at 190°C and a load of 2.16 kg), and a Shore A hardness of 86, and 1,000 ppm by weight of zinc borate (Zinc Borate 2335, produced by Tomita Pharmaceutical Co., Ltd., average particle diameter: 6 $\mu$m) as a cell diameter controlling agent added thereto were placed in an extruder, and melt kneaded and extruded from a die having a diameter of 2 mm as a strand, which was cooled in water and then granulated by cutting to make a bead weight of approximately 5 mg, thereby providing polymer beads.

<Production of Expanded Beads>

50 kg of the resulting polymer beads were mixed with 200 L of water as a dispersion medium, 300 g of kaolin as a dispersant, 8 g of sodium alkylbenzene sulfonate as a dipsersant aid, and 0.7 part by weight of dicumyl peroxide as a crosslinking agent per 100 parts by weight of the resin beads, and the mixture was charged in a closed vessel (autoclave) having a capacity of 400 L. Subsequently, carbon dioxide as a blowing agent was pressed therein to make a pressure in the closed vessel of 0.4 MPa(G). Subsequently, the content of the closed vessel was heated to 110°C at an impregnation temperature of the crosslinking agent under agitation, the content was retained for 30 minutes, then the temperature was increased to 160°C as the temperature for crosslinking and expanding, the content was retained for 15 minutes, then carbon dioxide as a blowing agent was further pressed in the closed vessel to make a pressure in the closed vessel of 1.4 MPa(G), the content was retained for 15 minutes, and then the content was discharged to the atmospheric pressure, thereby providing expanded crosslinked beads having a gel fraction of 54% by weight.
The resulting expanded beads were measured for the closed cell ratio, the apparent density, and the bulk density by the methods described above, and the results are shown in Table 1.

<Production of Expanded Beads Molded Article>

(Filling Step)

The resulting expanded beads were placed in a sealed vessel, and the internal pressure imparting step of controlling the pressure in the expanded beads to the internal pressure (IP) of the expanded beads shown in Table 1 was performed by appropriately controlling the pressure and the pressurizing time of the pressurizing step for the expanded beads, with the upper limits of the pressure and the pressurizing time being 2 kg/cm$^2$(G) and 24 hours. Subsequently, the expanded beads having an internal pressure having been controlled above were placed in a pressurization hopper, and the expanded beads were compressively filled from the hopper in a cavity of a metal mold in a flat plate shape of 300 mm in length, 300 mm in width, and 20 mm in thickness formed with one pair of metal molds of a positive mold and a negative mold, to make a filling ratio (X), under the condition described in the column "Filling condition" in Table 1.

(Liberating Step)

Thereafter, the pressure in the cavity of the metal mold was released to liberate the expanded beads in the compressed state.

(Heating Step)

Subsequently, the expanded beads in the cavity of the metal mold were heated with steam to fusion bond the expanded beads to each other. As the steam heating condition, the steps of the displacement with steam, the unidirectional heating, the reverse unidirectional heating, and the main heating were performed in this order with the steam heating time and the pressure in the mold in steam heating shown in the column "Molding condition" in Table 1. Subsequently, the expanded beads molded article was cooled by cooling the metal mold with water with the cooling time shown in the column "Molding condition" in Table 1, and thereafter, the expanded beads molded article was taken out from the metal mold. The expanded beads molded article taken out from the mold was heated and dried in an oven controlled to 60°C for 12 hours, so as to produce the expanded beads molded article.

The evaluation results of the density, the appearance, the dimensional stability, the fusion bondability, the compression characteristics, and the rebound characteristics of the resulting expanded beads molded article are shown in Table 1.

[Examples 2 and 3 and Comparative Example 2]

Expanded beads were produced in the same manner as in Example 1-1. Subsequently, an expanded beads molded article was produced in the same manner as in Example 1-1 except that in the filling step of the production of the expanded beads molded article, the internal pressure imparting step was not performed, and the condition shown in Table 1 was employed.

The properties of the expanded beads and the expanded beads molded article obtained are shown in Table 1.

[Comparative Example 3]

Expanded beads were produced in the same manner as in Example 1-1. Subsequently, an expanded beads molded article was produced in the same manner as in Example 1-1 except that the in-mold molding was performed by employing a cracking filling molding method shown below under the condition shown in Table 1. The properties of the expanded beads and the expanded beads molded article obtained are shown in Table 1.

<Production of Expanded Beads Molded Article>

(Filling Step)

The resulting expanded crosslinked beads without the internal pressure imparting step applied thereto were placed in a cavity of a metal mold with a cracking ratio set to 10% by volume, and the mold was fastened to make the cavity of the mold in a flat plate shape of 300 mm in length, 300 mm in width, and 20 mm in thickness.

(Heating Step)

Subsequently, the expanded beads in the cavity of the metal mold were heated with steam to fusion bond the expanded beads to each other. As the steam heating condition, the steps of the displacement with steam, the unidirectional heating, the reverse unidirectional heating, and the main heating were performed in this order with the steam heating time and the pressure in the mold in steam heating shown in the column "Molding condition" in Table 1. Subsequently, the expanded beads molded article was cooled by cooling the metal mold with water with the cooling time shown in the column "Molding condition" in Table 1, and thereafter, the expanded beads molded article was taken out from the metal mold. The expanded beads molded article taken out from the mold was heated and dried in an oven controlled to 60°C for 12 hours, so as to produce the expanded beads molded article.

[Examples 4-1 to 4-5 and Comparative Example 4]

Expanded crosslinked beads having a gel fraction of 52% by weight were produced in the same manner as in Example 1-1 except that the content of the closed vessel was heated to 160°C, the content was retained for 15 minutes, then carbon dioxide as a blowing agent was pressed in the closed vessel to make a pressure in the closed vessel of 1.4 MPa(G), the content was further retained for 15 minutes, and then the content was discharged to the atmospheric pressure. The pressure in the closed vessel in expanding was 2.5 MPa(G). Subsequently, an expanded beads molded article was produced in the same manner as in Example 1-1 except that the condition shown in Table 2 was employed. The properties of the expanded beads and the expanded beads molded article obtained are shown in Table 2.

[Examples 5-1 and 5-2 and Comparative Example 5]

Expanded beads were produced in the same manner as in Example 4-1. Subsequently, an expanded beads molded article was produced in the same manner as in Example 2 except that the condition shown in Table 2 was employed.

The properties of the expanded beads and the expanded beads molded article obtained are shown in Table 2.

[Examples 6-1 to 6-9 and Comparative Examples 6-1 and 6-2]

Expanded crosslinked beads having a gel fraction of 53% by weight were produced in the same manner as in Example 1-1 except that the content of the closed vessel was heated to 160°C, the content was retained for 15 minutes, then carbon dioxide as a blowing agent was pressed in the closed vessel to make a pressure in the closed vessel of 2.8 MPa(G), the content was further retained for 15 minutes, and then the content was discharged to the atmospheric pressure. The pressure in the closed vessel in expanding was 4.4 MPa(G). Subsequently, an expanded beads molded article was produced in the same manner as in Example 1-1 except that the condition shown in Table 3 was employed. The properties of the expanded beads and the expanded beads molded article obtained are shown in Table 3.

[Examples 7-1 to 7-3 and Comparative Example 7]

Expanded beads were produced in the same manner as in Example 6-1. Subsequently, an expanded beads molded article was produced in the same manner as in Example 2 except that the condition shown in Table 3 was employed.

The properties of the expanded beads and the expanded beads molded article obtained are shown in Table 3.

[Example 8 and Comparative Example 8-1]

<Production of Expanded Urethane Thermoplastic Elastomer (TPU) Beads>

100 parts by weight of an ether thermoplastic polyurethane ("Desmopan", a trade name, Model No. 9385AU, produced by Covestro AG) having a density of 1,120 g/L, a melting point of 164°C, a melt flow rate of 7 g/10 min (at 190°C and a load of 10 kg), and a Shore A hardness of 86, and 0.10 part by mass of talc as a cell nucleating agent added thereto was melt kneaded with talc in a twin screw extruder having an inner diameter of 20 mm. The kneaded product was extruded from small holes of a die attached to the tip of the extruder as a strand, which was cooled and then cut to provide resin beads of approximately 10 mg.

1 kg of the resulting resin beads and 3 L of water as a dispersion medium were charged in a 5 L pressure tight vessel equipped with an agitator, and 0.3 part by mass of kaolin as a dispersant and 0.004 part by mass of sodium alkylbenzene sulfonate as a surfactant per 100 parts by mass of the resin beads were added thereto.

The content of the pressure tight vessel was heated to a temperature of 127.5°C under agitation of the dispersion medium therein, carbon dioxide as a blowing agent was pressed therein to make a pressure in the closed vessel of 4.0 MPa(G), and the content was retained to an expanding temperature of 127.5°C for 15 minutes. Thereafter, while applying a back pressure with nitrogen and controlling the pressure in the vessel to 4.5 MPa(G), the expandable resin beads impregnated with the blowing agent were discharged along with the dispersion medium to the atmospheric pressure, thereby providing expanded beads.

<Production of Expanded Beads Molded Article>

An expanded beads molded article was produced in the same manner as in Example 2 except that the condition shown in Table 4 was employed.

The properties of the expanded beads and the expanded beads molded article obtained are shown in Table 4.

[Example 9 and Comparative Example 9-1]

Expanded beads were produced in the same manner as in Example 8 except that the content of the pressure tight vessel was heated to a temperature of 129°C under agitation of the dispersion medium therein, carbon dioxide as a blowing agent was pressed therein to make a pressure in the closed vessel of 4.0 MPa(G), and the expanding temperature was 129°C. An expanded beads molded article was produced in the same manner as in Example 1-1 except that the condition shown in Table 5 was employed. The properties of the expanded beads and the expanded beads molded article obtained are shown in Table 5.

[Comparative Example 8-2]

Expanded beads were produced in the same manner as in Example 8. An expanded beads molded article was produced in the same manner as in Comparative Example 3 except that a cracking filling molding method was employed, and the in-mold molding was performed under the condition shown in Table 4. The properties of the expanded beads and the expanded beads molded article obtained are shown in Table 4.

[Comparative Example 9-2]

Expanded beads were produced in the same manner as in Example 9. An expanded beads molded article was produced in the same manner as in Comparative Example 3 except that a cracking filling molding method was employed, and the in-mold molding was performed under the condition shown in Table 5. The properties of the expanded beads and the expanded beads molded article obtained are shown in Table 5.

The relationships between the compression filling ratio of the expanded TPO beads having the bulk densities obtained in Examples and Comparative Examples and the internal pressure (IP) of the expanded TPO beads are shown in Figs. 2 to 4.

<Evaluation>

The expanded beads molded articles obtained in Examples and Comparative Examples were evaluated in the following manner. The evaluation results are shown in Tables 1 to 5.

1. Appearance

The state of depressions (voids) among the expanded beads on the surface of the expanded beads molded article was visually observed, and evaluated by the following standard.

S: No void among the expanded beads was found, and the surface of the expanded beads molded article was smooth.

A: No void among the expanded beads was found, but some extent of unevenness due to the bulge of the respective expanded beads was confirmed on the surface of the expanded beads molded article.

B: Little void among the expanded beads was found, but unevenness due to the respective expanded beads was present on the surface of the expanded beads molded article.

C: Numerous voids were present among the expanded beads.

2. Dimensional Stability

The dimensional stability of the expanded beads molded article was evaluated based on the shrinkage ratio S [%] calculated according to the following expression from the dimension of the metal mold of 300 mm in length and the length X of the expanded beads molded article corresponding to the dimension of the metal mold after aging at 60°C for 12 hours from the molding.

$$S\ [\%] = ((300\text{-}X)/300) \times 100$$

The evaluation standard was as follows.

S: Shrinkage ratio of less than 5%
A: Shrinkage ratio of 5% or more and less than 6%
B: Shrinkage ratio of 6% or more and less than 7%
C: Shrinkage ratio of 7% or more

3. Fusion Bondability

The maximum tensile stress of the expanded beads molded article according to JIS K6767:1999 described above was measured.

4. Compression Characteristics

The 50% compression stress of the expanded beads molded article according to JIS K6767:1999 described above was measured.

5. Rebound Characteristics

The rebound modulus of the expanded beads molded article was measured by the method described above and evaluated by the following standard.

A: Rebound modulus of 60% or more
B: Rebound modulus of 50% or more and less than 60%
C: Rebound modulus of less than 50%

The aforementioned evaluation results of the expanded beads molded articles were values that were measured for a specimen obtained in such a manner that the expanded beads molded article was aged at 60°C under ordinary pressure for 12 hours and then aged by allowing to stand in a constant temperature room at a relative humidity of 50% and 23°C for 2 days (48 hours), unless otherwise indicated.

The expanded beads molded articles obtained in Examples of the present invention were excellent in appearance, dimensional stability, fusion bondability among the expanded beads, and mechanical properties, but the molded articles obtained in Comparative Examples were inferior in appearance. Furthermore, in the case where the method of compressively filling the expanded beads in the cavity of the metal mold with a gas for compression was employed in the present invention, the resulting expanded beads molded articles not only were excellent in appearance, but also had a small variation in density among each part of the expanded beads molded article, and were particularly excellent in uniformity of the mechanical properties.

It was found from the comparison of the state of the internal pressure imparted to the expanded beads used in Examples of the present invention that the molding cycle in the in-mold molding was shortened by performing the particular molding with compression filling of the present invention without the increase of the internal pressure of the expanded beads.

Table 1

| | | Unit | Example 1-1 | Example 1-2 | Example 13 | Example 1-4 | Example 1-5 | Example 1-6 | Example 1-7 | Example 1-8 | Example 1-9 | Comparative Example 1 | Example 2 | Comparative Example 2 | Example 3 | Comparative Example 3 |
|---|---|---|---|---|---|---|---|---|---|---|---|---|---|---|---|---|
| Expanded beads | Base material of beads | - | TPO | TPO | TPO | TPO | TPO | TPO | TPO | TPO | TPO | TPO | TPO | TPO | TPO | TPO |
| | Closed cell ratio | % | 95 | 95 | 95 | 95 | 95 | 95 | 95 | 95 | 95 | 95 | 95 | 95 | 95 | 95 |
| | Apparent density | g/L | 203 | 203 | 203 | 203 | 203 | 203 | 203 | 203 | 203 | 203 | 203 | 203 | 203 | 203 |
| | Bulk density (Bd) | g/L | 119 | 119 | 119 | 119 | 119 | 119 | 119 | 119 | 119 | 119 | 119 | 119 | 119 | 119 |
| | Internal pressure of expanded beads (IP) | $10^{-1}$ MPa | 0.40 | 0.42 | 0.60 | 0.19 | 0.96 | 0.75 | 1.07 | 1.27 | 1.60 | 0.32 | 0.00 | 0.00 | 0.00 | 0.00 |
| Filling condition | Pressure in pressurization hopper | MPa (G) | 0.22 | 0.32 | 0.22 | 0.52 | 0.22 | 0.42 | 0.42 | 0.32 | 0.12 | 0.12 | 0.32 | 0.22 | 0.42 | - |
| | Pressure in metal mold | MPa (G) | 0.20 | 0.30 | 0.20 | 0.50 | 0.20 | 0.40 | 0.40 | 0.30 | 0.10 | 0.10 | 0.30 | 0.20 | 0.40 | - |
| | Bulk density of expanded beads after compression filling | g/L | 134 | 148 | 129 | 199 | 117 | 151 | 149 | 131 | 114 | 112 | 179 | 155 | 198 | 131 (*) |
| | Filling ratio (X = M/(V·Bd)) | - | 1.13 | 1.24 | 1.08 | 1.67 | 1.03 | 1.27 | 1.25 | 1.10 | 0.96 | 1.00 | 1.50 | 1.30 | 1.66 | 1.10 |
| | Internal pressure + filling ratio (IP + M/(V·Bd)) | - | 1.53 | 1.66 | 1.68 | 1.86 | 1.99 | 2.02 | 2.32 | 2.37 | 2.56 | 1.32 | 1.50 | 1.30 | 1.66 | 1.10 |

(continued)

| | | | Example 1-1 | Example 1-2 | Example 13 | Example 1-4 | Example 1-5 | Example 1-6 | Example 1-7 | Example 1-8 | Example 1-9 | Comparative Example 1 | Example 2 | Comparative Example 2 | Example 3 | Comparative Example 3 |
|---|---|---|---|---|---|---|---|---|---|---|---|---|---|---|---|---|
| Molding condition | Displacement (time) | second | 5 | 5 | 5 | 5 | 5 | 5 | 5 | 5 | 5 | 5 | 5 | 5 | 5 | 5 |
| | Unidirectional heating (time (pressure)) | second [MPa (G)] | 9 (0.16) | 9 (016) | 9 (0.16) | 9 (0.16) | 9 (0.16) | 11 (0.20) | 11 (0.20) | 11 (0.20) | 11 (0.20) | 9 (0.16) | 11 (0.20) | 11 (0.20) | 11 (0.20) | 9 (0.16) |
| | Reverse unidirectional heating (time (pressure)) | second [MPa (G)] | 5 (0.22) | 5 (0.22) | 5 (0.22) | 5 (0.22) | 5 (0.22) | 5 (0.16) | 5 (0.16) | 5(0.16) | 5 (0.16) | 5 (0.22) | 5 (0.16) | 5 (0.16) | 5 (0.16) | 5 (0.22) |
| | Main heating (time (pressure)) | second [MPa (G)] | 2 (0.28) | 2 (0.28) | 2 (0.28) | 2 (0.28) | 2 (0.28) | 2 (0.32) | 2 (0.32) | 2 (0.32) | 2 (0.32) | 2 (0.28) | 2 (0.32) | 2 (0.32) | 2 (0.32) | 2 (0.28) |
| | Cooling time | second | 120 | 120 | 120 | 120 | 150 | 150 | 180 | 180 | 150 | 120 | 90 | 90 | 90 | 90 |
| Evaluation of molded article | Density | g/L | 155 | 167 | 145 | 231 | 131 | 165 | 160 | 140 | 127 | 136 | 216 | 183 | 216 | 154 |
| | 1. Appearance | - | A | S | S | S | S | S | A | A | A | C | A | C | S | C |
| | 2.Dimensional stability | - | S | S | S | S | S | S | S | S | S | S | S | S | S | S |
| | 3.Fusion bondability | MPa | 0.52 | 0.49 | 0.62 | 0.75 | 0.55 | 0.55 | 0.54 | 0.51 | 0.48 | not measured | 0.73 | not measured | 0.69 | not measured |
| | 4.Compression characteristics | MPa | 0.26 | 0.32 | 0.25 | 0.42 | 0.21 | 0.29 | 0.28 | 0.24 | 0.21 | not measured | 0.42 | not measured | 0.43 | not measured |
| | 5.Rebound characteristics | - | A | A | A | A | A | A | A | A | A | not measured | A | not measured | A | not measured |

*: cracking filling

EP 3 530 429 B1

Table 2

| | | | Example 4-1 | Example 4-2 | Example 43 | Example 44 | Example 4-5 | Comparative Example 4 | Example 5-1 | Example 5-2 | Comparative Example 5 |
|---|---|---|---|---|---|---|---|---|---|---|---|
| Expanded beads | Base material of beads | - | TPO | TPO | TPO | TPO | TPO | TPO | TPO | TPO | TPO |
| | Closed cell ratio | % | 95 | 95 | 95 | 95 | 95 | 95 | 95 | 95 | 95 |
| | Apparent density | g/L | 100 | 100 | 100 | 100 | 100 | 100 | 100 | 100 | 100 |
| | Bulk density (Bd) | g/L | 59 | 59 | 59 | 59 | 59 | 59 | 59 | 59 | 59 |
| | Internal pressure of expanded beads (IP) | $10^{-1}$ MPa | 0.75 | 0.34 | 0.65 | 1.00 | 1.20 | 0.26 | 0.00 | 0.00 | 0.00 |
| Filling condition | Pressure in pressurization hopper | MPa(G) | 0.12 | 0.32 | 0.32 | 0.32 | 0.32 | 0.12 | 0.22 | 0.32 | 0.12 |
| | Pressure in metal mold | MPa(G) | 0.10 | 0.30 | 0.30 | 0.30 | 0.30 | 0.10 | 0.20 | 0.30 | 0.10 |
| | Bulk density of expanded beads after compression filling | g/L | 56 | 96 | 84 | 78 | 76 | 64 | 112 | 135 | 91 |
| | Filling ratio (X = M/ (V·Bd)) | - | 0.95 | 1.62 | 1.42 | 1.33 | 1.28 | 1.08 | 1.89 | 2.28 | 1.54 |
| | Internal pressure + filling ratio (IP + MI (V.Bd)) | - | 1.70 | 1.96 | 2.07 | 2.33 | 2.48 | 1.34 | 1.89 | 2.28 | 1.54 |

| | | | Example 4-1 | Example 4-2 | Example 43 | Example 44 | Example 4-5 | Comparative Example 4 | Example 5-1 | Example 5-2 | Comparative Example 5 |
|---|---|---|---|---|---|---|---|---|---|---|---|
| Molding condition | Displacement (time) | second | 5 | 5 | 5 | 5 | 5 | 5 | 5 | 5 | 5 |
| | Unidirectional heating (time (pressure)) | second [MPa (G)] | 8 (0.14) | 8 (0.14) | 8 (0.14) | 8 (0.14) | 8 (0.14) | 8(0,14) | 9 (0.18) | 8 (0.14) | 9 (0.16) |
| | Reverse unidirectional heating (time (pressure)) | second [MPa (G)] | 5 (0.20) | 5 (0.20) | 5 (0.20) | 5 (0.20) | 5 (0.20) | 5 (0.20) | 5 (0.22) | 5 (0.20) | 5 (0.22) |
| | Main heating (time (pressure)) | second [MPa (G)] | 2 (0.26) | 2 (0.26) | 2 (0.26) | 2 (0.26) | 2 (0.26) | 2 (0.26) | 2 (0.28) | 2 (0.26) | 2 (0.28) |
| | Cooling time | second | 120 | 120 | 120 | 150 | 150 | 120 | 90 | 120 | 90 |
| Evaluation of molded article | Density | g/L | 69 | 109 | 94 | 89 | 87 | 83 | 137 | 154 | 118 |
| | 1.Appearance | - | A | S | S | S | S | C | S | S | C |
| | 2.Dimensional stability | - | A | S | S | S | S | B | S | S | B |
| | 3.Fusion bondability | MPa | 0.43 | 0.42 | 0.45 | 0.4 | 0.38 | not measured | 0.64 | 0.55 | not measured |
| | 4.Compression characteristics | MPa | 0.12 | 0.18 | 0.15 | 0.16 | 0.16 | not measured | 0.23 | 0.26 | not measured |
| | 5.Rebound characteristics | - | A | A | A | A | A | not measured | A | A | not measured |

Table 3

| Expand-ed beads | | | Exam-ple 6-1 | Exam-ple 6-2 | Exam-ple 6-3 | Exam-ple 6-4 | Exam-ple 6-5 | Exam-ple 6-6 | Exam-ple 6-7 | Exam-ple 6-8 | Exam-ple 6-9 | Compara-tive Exam-ple 6-1 | Compara-tive Exam-ple 6-2 | Exam-ple 7-1 | Exam-ple 7-2 | Exam-ple 7-3 | Compara-tive Exam-ple 7 |
|---|---|---|---|---|---|---|---|---|---|---|---|---|---|---|---|---|---|
| | Base materi-al of beads | - | TPO | TPO | TPO | TPO | TPO | TPO | TPO | TPO | TPO | TPO | TPO | TPO | TPO | TPO | TPO |
| | Closed cell ratio | % | 95 | 95 | 95 | 95 | 95 | 95 | 95 | 95 | 95 | 95 | 95 | 95 | 95 | 95 | 95 |
| | Apparent density | g/L | 75 | 75 | 75 | 75 | 75 | 75 | 75 | 75 | 75 | 75 | 75 | 75 | 75 | 75 | 75 |
| | Bulk density (Bd) | g/L | 42 | 42 | 42 | 42 | 42 | 42 | 42 | 42 | 42 | 42 | 42 | 42 | 42 | 42 | 42 |
| | Internal pres-sure of ex-panded beads (IP) | $10^{-1}$ MPa | 0.27 | 120 | 0.58 | 0.44 | 0.87 | 0.15 | 0.17 | 1.27 | 1.70 | 0.34 | 0.71 | 0.00 | 0.00 | 0.00 | 0.00 |

(continued)

| | | Example 6-1 | Example 6-2 | Example 6-3 | Example 6-4 | Example 6-5 | Example 6-6 | Example 6-7 | Example 6-8 | Example 6-9 | Comparative Example 6-1 | Comparative Example 6-2 | Example 7-1 | Example 7-2 | Example 7-3 | Comparative Example 7 |
|---|---|---|---|---|---|---|---|---|---|---|---|---|---|---|---|---|
| | Pressure in pressurization hopper | MPa (G) | 0.32 | 0.22 | 0.42 | 0.42 | 0.42 | 0.32 | 0.52 | 0.52 | 0.52 | 0.22 | 0.22 | 0.22 | 0.32 | 0.52 | 0.12 |
| | Pressure in metal mold | MPa (G) | 0.30 | 0.20 | 0.40 | 0.40 | 0.40 | 0.30 | 0.50 | 0.50 | 0.50 | 0.20 | 0.20 | 0.20 | 0.30 | 0.50 | 0.10 |
| | Bulk density of expanded beads after compression filling | g/L | 76 | 39 | 75 | 81 | 67 | 100 | 113 | 73 | 70 | 53 | 43 | 79 | 97 | 137 | 61 |
| Filling condition | Filling ratio (X = M/(V·Bd)) | - | 1.81 | 0.94 | 1.78 | 1.93 | 1.59 | 2.37 | 2.69 | 1.74 | 1.66 | 1.26 | 1.02 | 1.87 | 2.32 | 3.27 | 1.45 |
| | Internal pressure + filling ratio | - | 2.08 | 2.14 | 2.36 | 2.37 | 2.46 | 2.52 | 2.86 | 3.01 | 3.36 | 1.6 | 1.73 | 1.87 | 2.32 | 3.27 | 1.45 |
| | (IP + M/(V·Bd)) Displacement (time) | second | 5 | 5 | 5 | 5 | 5 | 5 | 5 | 5 | 5 | 5 | 5 | 5 | 5 | 5 | 5 |

| | | | Example 6-1 | Example 6-2 | Example 6-3 | Example 6-4 | Example 6-5 | Example 6-6 | Example 6-7 | Example 6-8 | Example 6-9 | Comparative Example 6-1 | Comparative Example 6-2 | Example 7-1 | Example 7-2 | Example 7-3 | Comparative Example 7 |
|---|---|---|---|---|---|---|---|---|---|---|---|---|---|---|---|---|---|
| Molding condition | Unidirectional heating (time (pressure)) | second [MPa(G)] | 8 (0.14) | 8 (0.14) | 8 (0.14) | 8 (0.14) | 8 (0.14) | 8 (0.14) | 8 (0.14) | 8 (0.14) | 8(0.14) | 8 (0.14) | 8 (0.14) | 8 (0.14) | 8 (0.14) | 9 (0.16) | 7 (0.12) |
| | Reverse unidirectional heating (time (pressure)) | second (MPa(G)] | 5 (0.20) | 5 (0.20) | 5 (0.20) | 5 (0.20) | 5 (0.20) | 5 (0.20) | 5 (0.20) | 5 (0.20) | 5 (0.20) | 5 (0.20) | 5 (0.20) | 5 (0.20) | 5 (0.20) | 5 (0.22) | 5 (0.18) |
| | Main heating | second | 2 (0.26) | 2 (0.26) | 2 (0.26) | 2 (0.26) | 2 (0.26) | 2 (0.26) | 2 (0.26) | 2 (0.26) | 2 (0.26) | 2 (0.26) | 2 (0.26) | 2 (0.26) | 2 (0.26) | 2 (0.28) | 2 (0.24) |
| | (time (pressure)) Cooling time | [MPa(G)] second | 120 | 120 | 120 | 120 | 150 | 120 | 120 | 180 | 210 | 120 | 120 | 90 | 120 | 180 | 90 |
| | Density | g/L | 94 | 50 | 88 | 95 | 79 | 119 | 132 | 86 | 80 | 69 | 58 | 69 | 121 | 152 | 78 |
| Evaluation of molded article | 1. Appearance | g/L | A | S | S | S | S | S | A | A | A | C | C | A | A | A | C |
| | 2. Dimensional stability | - | S | A | S | S | S | S | S | S | S | B | C | A | S | S | B |
| | 3. Fusion bondability | MPa | 0.43 | 0.34 | 0.38 | 0.44 | 0.37 | 0.43 | 0.52 | 0.45 | 0.45 | not measured | not measured | 0.35 | 0.45 | 0.58 | not measured |
| | 4.Compression characteristics | MPa | 0.16 | 0.10 | 0.15 | 0.16 | 0.14 | 0.20 | 0.21 | 0.15 | 0.14 | not measured | not measured | 0.13 | 0.20 | 0.27 | not measured |
| | 5. Rebound characteristics | - | A | A | A | A | A | A | A | A | A | not measured | not measured | A | A | A | not measured |

Table 4

| | | | Example 8 | Comparative Example 8-1 | Comparative Example 8-2 |
|---|---|---|---|---|---|
| Expanded beads | Base material of beads | - | TPU | TPU | TPU |
| | Closed cell ratio | % | 95 | 95 | 95 |
| | Apparent density | g/L | 211 | 211 | 211 |
| | Bulk density (Bd) | g/L | 115 | 115 | 115 |
| | Internal pressure of expanded beads (IP) | $10^{-1}$ MPa | 0.00 | 0.00 | 0.00 |
| Filling condition | Pressure in pressurization hopper | MPa(G) | 0.22 | 0.12 | - |
| | Pressure in metal mold | MPa(G) | 0.20 | 0.10 | - |
| | Bulk density of expanded beads after compression filling | g/L | 188 | 152 | 147 (*) |
| | Filling ratio ($X = M/(VBd)$) | - | 1.63 | 1.32 | 1.28 |
| Molding condition | Displacement (time) | second | 5 | 5 | 5 |
| | Unidirectional heating (time (pressure)) | second [MPa(G)] | 10 (0.12) | 10 (0.12) | 10 (0.12) |
| | Reverse unidirectional heating (time (pressure)) | second [MPa(G)] | 6 (0.18) | 6(0.18) | 6 (018) |
| | Main heating (time (pressure)) | second [MPa(G)] | 5 (0.24) | 5 (0.24) | 5 (0.24) |
| | Cooling time | second | 150 | 150 | 150 |
| Evaluation of molded article | Density | g/L | 234 | 206 | 215 |
| | 1.Appearance | - | A | C | C |
| | 2.Dimensional stability | - | S | C | C |
| | 3.Fusion bondability | MPa | 0.90 | not measured | not measured |
| | 4.Compression characteristics | MPa | 0.27 | not measured | not measured |
| | 5.Rebound characteristics | - | A | not measured | not measured |
| *: cracking filling | | | | | |

Table 5

| | | | Example 9 | Comparative Example 9-1 | Comparative Example 9-2 |
|---|---|---|---|---|---|
| Expanded beads | Base material of beads | - | TPU | TPU | TPU |
| | Closed cell ratio | % | 95 | 95 | 95 |
| | Apparent density | g/L | 166 | 166 | 166 |
| | Bulk density (Bd) | g/L | 81 | 81 | 81 |
| | Internal pressure of expanded beads (IP) | $10^{-1}$ MPa | 0.00 | 0.00 | 0.00 |

(continued)

| | | | Example 9 | Comparative Example 9-1 | Comparative Example 9-2 |
|---|---|---|---|---|---|
| **Filling condition** | Pressure in pressurization hopper | MPa(G) | 0.42 | 0.12 | - |
| | Pressure in metal mold | MPa(G) | 0.40 | 0.10 | - |
| | Bulk density of expanded beads after compression filling | g/L | 164 | 117 | 120 (*) |
| | Filling ratio (X = M/(V·Bd)) | - | 2.02 | 1.44 | 1.48 |
| **Molding condition** | Displacement (time) | second | 5 | 5 | 5 |
| | Unidirectional heating (time (pressure)) | second [MPa (G)] | 10 (0.12) | 10(0.12) | 10 (0.12) |
| | Reverse unidirectional heating (time (pressure)) | second [MPa (G)] | 6 (0.18) | 6 (0.18) | 6 (0.18) |
| | Main heating (time (pressure)) | second (MPa (G)] | 5 (0.24) | 5 (0.24) | 5 (0.24) |
| | Cooling time | second | 150 | 150 | 150 |
| **Evaluation of molded article** | Density | g/L | 182 | 158 | not measured |
| | 1.Appearance | - | S | C | C |
| | 2.Dimensional stability | - | S | C | C |
| | 3.Fusion bondability | MPa | 0.82 | not measured | not measured |
| | 4.Compression characteristics | MPa | 0.19 | not measured | not measured |
| | 5.Rebound characteristics | - | A | not measured | not measured |

*: cracking filling

## Claims

1. A method for producing an expanded thermoplastic elastomer beads molded article, comprising: filling expanded thermoplastic elastomer beads in a mold so as to be compressed state; and then supplying a heating medium into the mold to heat the expanded beads, so as to fusion bond the expanded beads to each other, the expanded beads having a closed cell ratio of 70% or more and a bulk density (Bd) after conditioning at 23°C and a relative humidity of 50% under ordinary pressure for 48 hours of 200 g/L or less, **characterised in that** a filled amount (M) [g] of the expanded beads in the mold having an inner capacity (V) [L] and an internal pressure (IP) [$10^{-1}$ MPa] of the expanded beads satisfying the following expressions (1) and (2):

$$0.9 \cdot V \cdot Bd \leq M \qquad (1)$$

$$4.2 \cdot Bd^{-0.23} \leq IP + M/(V \cdot Bd) \leq 8.0 \cdot Bd^{-0.23} \qquad (2).$$

2. The method for producing an expanded thermoplastic elastomer beads molded article according to claim 1, wherein the expanded thermoplastic elastomer beads are compressively filled in the mold with a pressurizing gas.

3. The method for producing an expanded thermoplastic elastomer beads molded article according to claim 2, wherein a pressure in the mold in compressively filling the expanded beads is from 0.08 to 1.0 [MPa(G)].

4. The method for producing an expanded thermoplastic elastomer beads molded article according to any one of claims 1 to 3, wherein the internal pressure (IP) of the expanded beads is from 0 to 2.0 [$10^{-1}$ MPa] (including 0).

5. The method for producing an expanded thermoplastic elastomer beads molded article according to any one of claims 1 to 3, wherein the internal pressure (IP) of the expanded beads is from 0 to 0.2 [$10^{-1}$ MPa] (including 0).

6. The method for producing an expanded thermoplastic elastomer beads molded article according to any one of claims 1 to 5, comprising, preceding the step of supplying a heating medium into the mold to heat the expanded beads, displacing a gas existing in gaps among the expanded beads filled in the mold by steam.

7. The method for producing an expanded thermoplastic elastomer beads molded article according to any one of claims 1 to 6, wherein

   the mold includes one pair of molds of a positive mold and a negative mold each having a steam chamber, and the step of supplying a heating medium into the mold to heat the expanded beads, includes, performed in this order:

   a unidirectional heating step of supplying steam to the steam chamber of any one of the positive mold and the negative mold, making the steam to pass through a molding cavity formed by combining the positive mold and the negative mold, in which the expanded beads are filled, and flowing the steam into the steam chamber of the other one of the molds;
   a reverse unidirectional heating step of supplying steam to the steam chamber of the other one of the molds, making the steam to pass through the molding cavity, and flowing the steam into to the steam chamber of the mold, to which the steam has been supplied in the unidirectional heating step; and
   a main heating step of supplying steam simultaneously to the steam chambers of the positive mold and the negative mold, so as to fusion bond the expanded beads to each other.

8. The method for producing an expanded thermoplastic elastomer beads molded article according to any one of claims 1 to 7, wherein the expanded thermoplastic elastomer beads have a boiling xylene insoluble content of 60% by weight or less (including 0), and are expanded olefin thermoplastic elastomer beads containing, as a base material, a multi-block copolymer containing a polyethylene block and an ethylene-$\alpha$-olefin copolymer block wherein the multi-block copolymer has a Shore A hardness of from 65 to 95.

9. The method for producing an expanded thermoplastic elastomer beads molded article according to any one of claims 1 to 7, wherein the expanded thermoplastic elastomer beads are expanded urethane thermoplastic elastomer beads containing, as a base material, a urethane thermoplastic elastomer, having a Shore A hardness of from 80 to 95.

**Patentansprüche**

1. Ein Verfahren zur Herstellung eines Formkörpers aus aufgeschäumten Perlen eines thermoplastischen Elastomers, das umfasst: Das Einfüllen aufgeschäumter Perlen eines thermoplastischen Elastomers in eine Form in einer Weise, dass sie sich in einem komprimierten Zustand befinden; und dann das Zuführen eines Heizmediums in die Form, um die aufgeschäumten Perlen zu erhitzen, so dass die aufgeschäumten Perlen durch Verschmelzen miteinander verbunden werden, die aufgeschäumten Perlen einen Anteil von geschlossenen Zellen von 70 % oder mehr und eine Schüttdichte (Bd) nach der Konditionierung bei 23 °C und einer relativen Luftfeuchtigkeit von 50 % bei Normaldruck für 48 Stunden von 200 g/L oder weniger aufweisen, ausgezeichnet dadurch, dass die eingefüllte Menge (M) [g] der aufgeschäumten Perlen in der Form mit einem inneren Fassungsvermögen (V) [L] und einem Innendruck (IP) [$10^{-1}$ MPa] der aufgeschäumten Perlen den folgenden Gleichungen (1) und (2) genügt:

$$0{,}9 \cdot V \cdot Bd \leq M \qquad\qquad (1)$$

$$4{,}2 \cdot Bd^{-0{,}23} \leq IP + M/(V \cdot Bd) \leq 8{,}0 \cdot Bd^{-0{,}23} \qquad\qquad (2).$$

2. Das Verfahren zur Herstellung eines Formkörpers aus aufgeschäumten Perlen eines thermoplastischen Elastomers gemäß Anspruch 1, wobei die aufgeschäumten Perlen eines thermoplastischen Elastomers unter Kompression mit einem unter Druck setzenden Gas in die Form gefüllt werden.

3. Das Verfahren zur Herstellung eines Formkörpers aus aufgeschäumten Perlen eines thermoplastischen Elastomers gemäß Anspruch 2, wobei der Druck in der Form beim Einfüllen der aufgeschäumten Perlen unter Kompression von 0,08 bis 1,0 [MPa(G)] beträgt.

4. Das Verfahren zur Herstellung eines Formkörpers aus aufgeschäumten Perlen eines thermoplastischen Elastomers gemäß einem der Ansprüche 1 bis 3, wobei der Innendruck (IP) der aufgeschäumten Perlen von 0 bis 2,0 [$10^{-1}$ MPa] (einschließlich 0) beträgt.

5. Das Verfahren zur Herstellung eines Formkörpers aus aufgeschäumten Perlen eines thermoplastischen Elastomers gemäß einem der Ansprüche 1 bis 3, wobei der Innendruck (IP) der aufgeschäumten Perlen von 0 bis 0,2 [$10^{-1}$ MPa] (einschließlich 0) beträgt.

6. Das Verfahren zur Herstellung eines Formkörpers aus aufgeschäumten Perlen eines thermoplastischen Elastomers gemäß einem der Ansprüche 1 bis 5, das, vor dem Schritt des Zuführens eines Heizmediums in die Form zum Erhitzen der aufgeschäumten Perlen, das Verdrängen eines Gases, das in den Zwischenräumen zwischen den in die Form gefüllten aufgeschäumten Perlen vorhanden ist, durch Dampf umfasst.

7. Das Verfahren zur Herstellung eines Formkörpers aus aufgeschäumten Perlen eines thermoplastischen Elastomers gemäß einem der Ansprüche 1 bis 6, wobei

die Form ein Paar Formen einschließt, bestehend aus einer Positivform und einer Negativform, die jeweils eine Dampfkammer aufweisen, und
der Schritt des Zuführens eines Heizmediums in die Form, um die aufgeschäumten Perlen zu erhitzen, in dieser Reihenfolge ausgeführt, beinhaltet:

eine unidirektionale Heizstufe des Zuführens von Dampf in die Dampfkammer einer beliebigen der Positivform und der Negativform, wobei der Dampf durch einen Formhohlraum geleitet wird, der durch das Kombinieren der Positivform und der Negativform gebildet wird, in den die aufgeschäumten Perlen gefüllt werden, und der Dampf in die Dampfkammer der anderen der Formen fließt;
eine umgekehrte unidirektionale Heizstufe des Zuführens von Dampf in die Dampfkammer der anderen der Formen, wobei der Dampf durch den Formhohlraum geleitet wird und der Dampf in die Dampfkammer der Form strömt, der der Dampf in der unidirektionalen Heizstufe zugeführt wurde; und
eine Hauptheizstufe des gleichzeitigen Zuführens von Dampf in die Dampfkammern der positiven Form und der negativen Form, um die aufgeschäumten Perlen miteinander zu verschmelzen.

8. Das Verfahren zur Herstellung eines Formkörpers aus aufgeschäumten Perlen eines thermoplastischen Elastomers gemäß einem der Ansprüche 1 bis 7, wobei die aufgeschäumten Perlen des thermoplastischen Elastomers einen in siedendem Xylol unlöslichen Gehalt von 60 Gew.-% oder weniger (einschließlich 0) aufweisen und aufgeschäumte Perlen eines thermoplastischen Olefin-Elastomers sind, die, als Basismaterial, ein Multiblock-Copolymer enthalten, das einen Polyethylenblock und einen Ethylen-$\alpha$-Olefin-Copolymerblock enthält, wobei das Multiblock-Copolymer eine Shore A-Härte von 65 bis 95 aufweist.

9. Das Verfahren zur Herstellung eines Formkörpers aus aufgeschäumten Perlen eines thermoplastischen Elastomers gemäß einem der Ansprüche 1 bis 7, wobei es sich bei den aufgeschäumten Perlen eines thermoplastischen Elastomers um aufgeschäumte Perlen eines thermoplastischen Urethanelastomers handelt, die, als Basismaterial, ein thermoplastisches Urethanelastomer enthalten, das eine Shore A-Härte von 80 bis 95 aufweist.

**Revendications**

1. Procédé pour produire un article moulé en perles expansées d'élastomère thermoplastique, comprenant : remplir des perles expansées d'élastomère thermoplastique dans un moule afin d'être état compressé ; et puis fournir un milieu chauffant dans le moule pour chauffer les perles expansées, de manière à lier par fusion les perles expansées les unes aux autres, les perles expansées ayant un rapport de cellules fermées de 70 % ou plus et une densité apparente (Bd) après conditionnement à 23°C et une humidité relative de 50% sous pression ordinaire pendant 48 heures de 200 g/L ou moins,

**caractérisé en ce que**

une quantité remplie (M) [g] des perles expansées dans le moule ayant une capacité interne (V) [L] et une pression interne (IP) [10$^{-1}$ MPa] des perles expansées satisfaisant les expressions (1) et (2) suivantes :

$$0,9 \cdot V \cdot Bd \leq M \qquad\qquad (1)$$

$$4,2 \cdot Bd^{-0,23} \leq IP + M/(V \cdot Bd) \leq 8,0 \cdot Bd^{-0,23} \qquad\qquad (2).$$

2. Procédé pour produire un article moulé en perles expansées d'élastomère thermoplastique selon la revendication 1, dans lequel les perles expansées d'élastomère thermoplastique sont remplies de manière compressive dans le moule avec un gaz pressurisant.

3. Procédé pour produire un article moulé en perles expansées d'élastomère thermoplastique selon la revendication 2, dans lequel une pression dans le moule en remplissant de manière compressive les perles expansées est de 0,08 à 1,0 [MPa(G)].

4. Procédé pour produire un article moulé en perles expansées d'élastomère thermoplastique selon l'une quelconque des revendications 1 à 3, dans lequel la pression interne (LP) des perles expansées est de 0 à 2,0 [10$^{-1}$ MPa] (y compris 0).

5. Procédé pour produire un article moulé en perles expansées d'élastomère thermoplastique selon l'une quelconque des revendications 1 à 3, dans lequel la pression interne (IP) des perles expansées est comprise entre 0 et 0,2 [10$^{-1}$ MPa] (y compris 0).

6. Procédé pour produire un article moulé en perles expansées d'élastomère thermoplastique selon l'une quelconque des revendications 1 à 5, comprenant, précédant l'étape consistant à fournir un milieu chauffant dans le moule pour chauffer les perles expansées, déplacer un gaz existant dans des espaces entre les perles expansées remplies dans le moule par de la vapeur.

7. Procédé pour produire un article moulé en perles expansées d'élastomère thermoplastique selon l'une quelconque des revendications 1 à 6, dans lequel

le moule comprend une paire de moules d'un moule positif et d'un moule négatif ayant chacun une chambre à vapeur, et
l'étape consistant à fournir un milieu chauffant dans le moule pour chauffer les perles expansées comprend, exécuté dans cet ordre :

une étape de chauffage unidirectionnel consistant à fournir de la vapeur à la chambre à vapeur de l'un quelconque du moule positif et du moule négatif, faire que la vapeur passe à travers une cavité de moulage formée en combinant le moule positif et le moule négatif, dans laquelle les perles expansées sont remplies, et écouler la vapeur dans la chambre à vapeur de l'autre des moules ;
une étape de chauffage unidirectionnel inverse consistant à fournir de la vapeur à la chambre à vapeur de l'autre des moules, faire que la vapeur passe à travers la cavité de moulage, et faire écouler la vapeur dans la chambre à vapeur du moule, auquel la vapeur a été fournie dans l'étape de chauffage unidirectionnel ; et
une étape de chauffage principal consistant à fournir de la vapeur simultanément aux chambres à vapeur du moule positif et du moule négatif, de manière à lier par fusion les perles expansées les unes aux autres.

8. Procédé pour produire un article moulé en perles expansées d'élastomère thermoplastique selon l'une quelconque des revendications 1 à 7, dans lequel les perles expansées d'élastomère thermoplastique ont une teneur insoluble dans l'xylène bouillant de 60 % en poids ou moins (y compris 0), et sont des perles expansées d'élastomère thermoplastique oléfinique contenant, comme matériau de base, un copolymère multi-bloc contenant un bloc de polyéthylène et un bloc de copolymère éthylène-α-oléfine, dans lequel le copolymère multi-bloc a une dureté Shore A allant de 65 à 95.

9. Procédé pour produire un article moulé en perles expansées d'élastomère thermoplastique selon l'une quelconque des revendications 1 à 7, dans lequel les perles expansées d'élastomère thermoplastique sont des perles expansées d'élastomère thermoplastique uréthane contenant, comme matériau de base, un élastomère thermoplastique uréthane, ayant une dureté Shore A allant de 80 à 95.

[Fig. 1]

Fig. 1

[Fig. 2]

Fig. 2

[Fig. 3]

Fig. 3    TPO : Bulk density Bd=59g/L

[Fig.4]

Fig. 4    TPO : Bulk density Bd=42g/L

[Fig. 5]

Fig. 5

**EP 3 530 429 B1**

## REFERENCES CITED IN THE DESCRIPTION

### Patent documents cited in the description

- US 20120329892 A
- JP 2003147116 A
- JP S58171924 A
- JP S5122951 B
- JP S5712035 A